# EUROPÄISCHE PATENTSCHRIFT

(11) **EP 3 519 155 B1**
(45) Veröffentlichungstag und Bekanntmachung des Hinweises auf die Patenterteilung: **20.10.2021**
(21) Anmeldenummer: 17780672.6
(22) Anmeldetag: 27.09.2017
(51) Int. Cl.: B29C 45/76, B29C 45/14

(54) **VERFAHREN ZUM VERARBEITEN VON FOLIEN SOWIE EINE VORSCHUBEINRICHTUNG**
METHOD FOR PROCESSING FILMS, AND A FEED DEVICE
PROCÉDÉ DE TRAITEMENT DE FILMS AINSI QUE DISPOSITIF D'AVANCEMENT

(30) Priorität: 27.09.2016 DE 102016118259
(43) Veröffentlichungstag der Anmeldung: 07.08.2019
(73) Patentinhaber: Leonhard Kurz Stiftung & Co. KG, 90763 Fürth (DE)
(72) Erfinder: HAHN, Martin, 91567 Herrieden (DE); HÖGL, Helmut, 90431 Nürnberg (DE); STUHLINGER, Christoph, 90530 Wendelstein (DE)
(74) Vertreter: Louis Pöhlau Lohrentz
(86) Internationale Anmeldenummer: PCT/EP2017/074453
(87) Internationale Veröffentlichungsnummer: WO 2018/060225

(56) Entgegenhaltungen:
- DE-T5-112009 002 031
- JP-A- 2000 210 971
- JP-A- 2003 062 869
- JP-A- 2004 074 476
- JP-A- 2010 162 763
- US-A1- 2007 194 489
- US-A1- 2009 230 588
- DATABASE WPI Week 199812 Thomson Scientific, London, GB; AN 1998-125022 XP002776798, -& JP H10 6358 A (APIC YAMADA CORP) 13. Januar 1998 (1998-01-13)

## Beschreibung

Die Erfindung betrifft ein Verfahren zum Verarbeiten von Folien, insbesondere IMD-Folien, sowie eine Vorschubeinrichtung, ein Spritzgusswerkzeug und ein System.

Zur produktionsintegrierten Oberflächendekoration von Kunststoffteilen werden Kunststofffolien bzw. von einer Trägerfolie transferierbare Schichten eingesetzt. Derartig dekorierte Kunststoffteile werden beispielsweise im Automobilbau für Automobil-Innenteile wie Türleisten, Leisten in Instrumententafeln und Mittelkonsolblenden, im Unterhaltungselektronik-Bereich für Dekorleisten an Fernsehgeräten oder im Telekommunikationsbereich für Gehäuseschalen tragbarer Geräte wie Mobiltelefone eingesetzt. Bei der Oberflächendekoration von Kunststoffteilen wird beim Einsatz der IMD-Technologie (IMD = In-Mould Decoration) eine Kunststofffolie in eine Kavität einer Werkzeugform eingebracht und sodann mit einem zunächst fließfähigen Füllmedium hinterspritzt. Die Folie wird üblicherweise automatisch mittels einer Vorschubeinrichtung in die Werkzeugform transportiert. Nach dem Hinterspritzen kann die Trägerfolie von den auf das erstarrte Füllmedium transferierten Schichten abgezogen werden. So wird beispielsweise in der JP 62128720 A eine IMD-Folie offenbart, die mittels einer Vorschubeinrichtung in eine Spritzgussform geführt wird. Im Fall von Einzelbilddarstellungen im Bereich der aufzukaschierenden Dekorfolie wird die IMD-Folie außerdem über Sensoren und Positionsmarkierungen auf der IMD-Folie lagerichtig zur Spritzgussform positioniert, bevor die Spritzgussform geschlossen und die IMD-Folie mit der heißen Kunststoffspritzmasse hinterspritzt wird.

Die JP H106358 A betrifft ein Verfahren zum Verarbeiten von zwei Folienbahnen mittels einer Vorschubeinrichtung und einem Spritzgusswerkzeug.

Zur Erhöhung der Stückzahl ist die Verwendung von mehreren hintereinander liegenden Kavitäten bekannt, wobei die Positionierung der Folie mit der Anzahl der hintereinander angeordneten Kavitäten komplizierter wird.

Es ist nun Aufgabe der Erfindung, ein verbessertes Verfahren zum Verarbeiten von Folien sowie eine verbesserte Vorschubeinrichtung und ein verbessertes Spritzgusswerkzeug bereitzustellen.

Diese Aufgabe wird gelöst durch ein Verfahren zum Verarbeiten von Folienbahnen, insbesondere IMD-Folienbahnen, nach einem der Ansprüche 1 bis 10.

Ferner wird diese Aufgabe auch gelöst durch ein System umfassend eine Vorschubeinrichtung nach einem der Ansprüche 11 bis 13.

Hierdurch wird der Vorteil erzielt, dass trotz einer Erhöhung der Stückzahl die Positionierung der auf den Folien befindlichen Motive in den Spritzgusswerkzeugen einfacher und exakter möglich ist, ohne dass dabei hohe Toleranzen auftreten. Insgesamt kann hierdurch die Stückzahl weiter erhöht werden, wobei der Ausschuss gleichzeitig verringert wird. Dies führt zu einer Verringerung der Stückkosten.

Unter Vorschubrichtung wird hier die Richtung verstanden, in der die Folienbahnen von den Folienabwicklern in Richtung der Folienaufwicklern geführt werden. Es ist beispielsweise möglich, dass die Folienabwickler und die Folienaufwickler in einer von einer x- und y-Koordinate aufgespannten Ebene angeordnet sind, so dass die zwischen den Folienab- und Folienaufwicklern verlaufenden Folienbahnen insbesondere entlang der y-Achse verlaufen. So ist es beispielsweise möglich, dass die Folienbahnen von oben nach unten vorgeschoben werden, d.h. insbesondere dass die Vorschubrichtung lotrecht verläuft, oder dass die Folienbahnen von rechts nach links oder von links nach rechts vorgeschoben werden, d.h. insbesondere dass die Vorschubrichtung waagerecht verläuft.

Unter im Wesentlichen senkrecht wird hierbei ein Winkelbereich zwischen 80° und 100°, bevorzugt zwischen 85° und 95°, insbesondere 90° verstanden.

Unter Draufsicht wird hier eine Draufsicht auf die zwei nebeneinander angeordneten Folienbahnen verstanden. So ist es möglich, dass die Draufsicht von der Flächennormalen, also einer Richtung senkrecht zu einer von den zwei nebeneinander angeordneten Folienbahnen aufgespannten Ebene und/oder in Schließ- und Öffnungsrichtung des Spritzgusswerkzeugs erfolgt. Liegen beispielsweise die zwei nebeneinander angeordneten Folienbahnen in einer von einer x- und y-Koordinate aufgespannten Ebene, so handelt es sich bei der Richtung der Draufsicht um eine z-Richtung senkrecht zur von der x- und y-Koordinate aufgespannten Ebene.

Ein Motiv kann beispielsweise ein graphisch gestalteter Umriss, eine figürliche Darstellung, ein Bild, ein visuell erkennbares Designelement, ein Symbol, ein Logo, ein Portrait, ein Muster, ein alphanumerisches Zeichen, ein Text, eine farbliche Ausgestaltung und dergleichen sein.

Die Folienbahnen sind bevorzugt so ausgebildet, dass die Motive jeweils von einem motivfreien Bereich umgeben sind. Insbesondere ist der motivfreie Bereich jeweils zwischen den Motiven und den Seitenrändern der Folienbahnen und/oder zwischen den Motiven ausgebildet. Der motivfreie Bereich bildet daher bevorzugt einen Rahmen, insbesondere einen umlaufenden Rahmen, um ein jeweiliges Motiv. Bevorzugt beträgt die Breite des motivfreien Bereichs zwischen 10 mm und 550 mm, insbesondere zwischen 25 mm und 300 mm.

Der motivfreie Bereich weist bevorzugt einen ersten Teilbereich und einen zweiten Teilbereich auf, wobei insbesondere der erste Teilbereich Platz für die Positionierung einer Klemmvorrichtung, insbesondere eines Klemmrahmens, bildet und/oder der zweite Teilbereich Platz für die Positionierung von Registermarken bildet.

Es ist dabei möglich, dass der erste Teilbereich direkt benachbart zum Motiv angeordnet ist, insbesondere dass der erste Teilbereich unmittelbar an das Motiv angrenzend angeordnet ist, um die Fixierung der Folienbahnen mittels Klemmvorrichtung in unmittelbarer Nähe am Motiv zu erreichen, so dass Störfaktoren wie Foliendehnungen, Faltenbildung etc. minimiert werden. Der zweite Teilbereich und das Motiv sind bevorzugt beabstandet zueinander angeordnet. Insbesondere liegt der erste Teilbereich zwischen dem Motiv und dem zweiten Teilbereich. Hierdurch können die im zweiten Teilbereich vorgesehenen Registermarken leichter von Sensoren erfasst werden bzw. ist eine leichtere Positionierung der Sensoren möglich.

Alternativ ist aber auch die umgekehrte Reihenfolge möglich, d.h. der zweite Teilbereich für die Registermarken ist direkt benachbart zum Motiv, insbesondere unmittelbar an das Motiv angrenzend angeordnet und der erste Teilbereich für die Fixierung der Folie mittels Klemmvorrichtung ist relativ dazu weiter außen vorgesehen.

Der erste Teilbereich weist dabei bevorzugt eine Breite zwischen 5 mm und 500 mm, insbesondere bevorzugt zwischen 15 mm und 200 mm, auf. Der zweite Teilbereich weist dabei bevorzugt eine Breite zwischen 5 mm und 50 mm, insbesondere bevorzugt zwischen 15 mm und 30 mm, auf.

So ist es weiter möglich, dass eine Folienbahn unterschiedliche Motive, insbesondere in Vorschubrichtung aufeinanderfolgende Motive, aufweist. Weiter ist es von Vorteil, dass die zwei nebeneinander angeordneten Folienbahnen übereinstimmende Motive aufweisen. Die Folienbahnen können aber auch voneinander abweichende Motive aufweisen.

Bei den Motiven kann es sich bevorzugt sowohl um Einzelbilder als auch um Endlosmotive handeln. Vorzugsweise überragen die Motive die Kavitäten. So ist es möglich, dass die Motive um mindestens 1 % größer als die Kavitäten sind. Insbesondere überragen die Motive die Kavitäten in jede Richtung, bevorzugt zwischen 1 mm und 20 mm. Durch dieses geringe Überragen der Motive wird erzielt, dass wenig Lack bzw. Farbe außerhalb der Kavitäten vorhanden ist, so dass schädliche Haftungen und Verschmutzungen an dem Spritzgusswerkzeug vermieden werden können.

Unter passgenau oder registergenau ist eine Lagegenauigkeit zweier oder mehr Elemente, hier insbesondere der Motive der Folienbahnen und der Kavitäten, zueinander zu verstehen. Dabei soll sich die Passgenauigkeit oder Registergenauigkeit innerhalb einer vorgegebenen Toleranz bewegen und dabei möglichst gering sein. Gleichzeitig ist die Passgenauigkeit von mehreren Elementen zueinander ein wichtiges Merkmal, um die Prozesssicherheit zu erhöhen. Die lagegenaue Positionierung kann dabei insbesondere mittels sensorisch, vorzugsweise optisch detektierbarer Passermarken oder Registermarken erfolgen. Diese Registermarken können dabei entweder spezielle separate Elemente oder Bereiche oder Schichten darstellen oder selbst Teil der zu positionierenden Elemente, insbesondere der Folienbahnen, sein.

Bevorzugte Ausgestaltungen sind in den Unteransprüchen bezeichnet.

Erfindungsgemäß ist, dass die zumindest zwei nebeneinander angeordneten Folienbahnen unabhängig voneinander bereitgestellt, zugeführt und/oder ausgerichtet werden. Erfindungsgemäß ist, dass die Vorschubeinrichtung so ausgebildet ist, dass die zumindest zwei nebeneinander angeordneten Folienbahnen unabhängig voneinander bereitgestellt, zugeführt und/oder ausgerichtet werden. Hierdurch wird eine hohe Passgenauigkeit der Motive zu den Kavitäten für jede Folienbahn erreicht. So ist es möglich, auf zueinander unterschiedliche Motive der Folienbahnen und/oder auf unterschiedliche Toleranzen der Motive der Folienbahnen individuell zu reagieren. Hierdurch wird die Passgenauigkeit weiter gesteigert.

Es ist aber auch möglich, dass die zumindest zwei nebeneinander angeordneten Folienbahnen miteinander synchron bereitgestellt, zugeführt und/oder ausgerichtet werden.

Erfiindungsgemäß erfolgt die Ausrichtung oder Zuführung der zumindest zwei nebeneinander angeordneten Folienbahnen jeweils anhand von wenigstens einer Registermarke.

Vorzugsweise sind die Registermarken so ausgebildet, dass mittels diesen Registermarken die Positionen in Vorschubrichtung und/oder in eine Richtung senkrecht zur Vorschubrichtung der zwei nebeneinander angeordneten Folienbahnen bestimmt werden können.

Bevorzugt ist mindestens eine Registermarke je einem Motiv der zwei nebeneinander angeordneten Folienbahnen zugeordnet. So ist es möglich, dass eine einzige Registermarke einem Motiv zugeordnet ist, so dass mittels dieser die Position des zugeordneten Motivs in Vorschubrichtung und in eine Richtung senkrecht zur Vorschubrichtung bestimmt werden kann. Weiter ist es auch möglich, dass zwei Registermarken einem Motiv zugeordnet sind, so dass mittels einer der Registermarken die Position des zugeordneten Motivs in Vorschubrichtung und mittels der anderen Registermarke die Position des zugeordneten Motivs in eine Richtung senkrecht zur Vorschubrichtung bestimmt werden kann.

Weiter ist es auch zweckmäßig, dass der Abstand von Registermarke zum zugeordneten Motiv möglichst gering ist, insbesondere dass der Abstand zwischen 5 mm und 500 mm, insbesondere zwischen 15 mm und 200 mm liegt. Hierdurch wird die Positionierungsgenauigkeit weiter erhöht.

Vorzugsweise ist die Lagebeziehung zwischen wenigstens einer Registermarke und zugeordnetem Motiv für alle Motive je einer der zwei nebeneinander angeordneten Folienbahnen gleich.

Vorteilhafterweise sind die Registermarken jeweils an mindestens einem Seitenrand der zwei nebeneinander angeordneten Folienbahnen in Vorschubrichtung angeordnet. Zweckmäßigerweise sind die Registermarken jeweils an beiden Seitenrändern der zwei nebeneinander angeordneten Folienbahnen in Vorschubrichtung angeordnet. Idealerweise sind die Registermarken an beiden Seitenränder gleich angeordnet. Hierdurch wird erreicht, dass bei Einlegen der Folienbahnen in die Vorschubeinrichtung bzw. in das System bzw. in das Spritzgusswerkzeug nicht näher darauf geachtet werden muss, welche Folienbahn auf welche Seite eingelegt werden muss. Es sind somit keine zwei Foliendesigns notwendig. Vorzugsweise sind die zwei nebeneinander angeordneten Folienbahnen spiegelsymmetrisch ausgebildet.

Auch können die zwei nebeneinander angeordneten Folienbahnen auf beiden bzw. sich gegenüberliegenden Seiten Registermarken aufweisen.

Die Registermarke ist auf keine feste Geometrie festgelegt. Vorteilhafterweise handelt es sich um rechteckige Registermarken. Weiter ist es möglich, dass die Registermarke als Punkt, Kreuzmarke, Pfeil, Mehreck oder Quadrat ausgebildet ist. Ferner ist es möglich, dass die Registermarke als Streifen ausgebildet ist, der sich im Wesentlichen entlang der Folienbahnen, insbesondere in Vorschubrichtung, erstreckt.

Erfindungsgemäß erfolgt die Ausrichtung oder Zuführung der zumindest zwei nebeneinander angeordneten Folienbahnen jeweils anhand wenigstens eines Motives je einer der zumindest zwei nebeneinander angeordneten Folienbahnen. Hierdurch wird eine passgenaue Anordnung der Motive zu den Kavitäten erreicht, ohne dass Registermarken verwendet werden müssen. Da die Motive quasi selbst als Registermarken dienen, spielen mögliche Verdehnungen der Folienbahnen zwischen Registermarke und Motiv keine Rolle. Somit können auch Folienbahnen ohne Registermarken verarbeitet werden. Weiter ist es auch möglich, dass Folienbahnen sowohl mit als auch ohne Registermarken verarbeitet werden.

Zweckmäßigerweise weist die Vorschubeinrichtung und/oder das System wenigstens einen Sensor zur Erfassung von wenigstens einer Registermarke und/oder wenigstens eines Motivs auf. Hierbei ist es möglich, dass es sich bei dem Sensor um einen Durchlicht- und/oder Auflichtsensor handelt. Vorzugsweise handelt es sich bei dem Durchlichtsensor um eine Gabellichtschranke und bei dem Auflichtsensor um einen Reflexionssensor.

Vorteilhafterweise weist der wenigstens eine Sensor von zumindest einer der Kavitäten einen Abstand zwischen 5 mm und 200 mm, bevorzugt zwischen 15 mm und 50 mm, auf. Durch diesen möglichst geringen Abstand kann die Positionierungsgenauigkeit der Motive relativ zur Kavität weiter erhöht werden, da ein unkontrollierbarer Einfluss der Folienverdrehung so gering wie möglich gehalten werden kann.

Weiter ist es möglich, dass der wenigstens eine Sensor derart angeordnet ist, dass dieser im Wesentlichen Bereiche einer Folienbahn, insbesondere Randbereiche einer Folienbahn erfasst, wobei die Bereiche in Draufsicht jeweils auf einer von der anderen Folienbahn abgewandten Seite der einen Folienbahn liegen. Hierdurch wird ein störender Einfluss der Sensoren, insbesondere im Hinblick auf das Spritzgusswerkzeug vermieden. Insbesondere wird hierdurch ein Kollidieren der Sensoren beim Öffnen und Schließen des Spritzgusswerkzeugs mit dem Spritzgusswerkzeug vermieden.

Vorzugsweise umfassen das Zuführen und/oder die Ausrichtung der zumindest zwei nebeneinander angeordneten Folienbahnen eine erste und eine zweite Phase. Die Phasen unterscheiden sich dabei insbesondere durch ihre Folientransportdurchschnittsgeschwindigkeit und/oder ihre Folientransportstrecke. Hierdurch wird zum einen das Motiv schnell in den Bereich der Kavität eingebracht und zum anderen eine exakte Positionierung innerhalb der Kavität erreicht, so dass die Prozesszeiten weiter verringert werden können.

Zweckmäßigerweise bildet das Zuführen die erste Phase und die Ausrichtung die zweite Phase aus. Insbesondere stellt das Zuführen den Transport der zwei nebeneinander angeordneten Folienbahnen in Vorschubrichtung in das Spritzgusswerkzeug dar, wobei die Richtung senkrecht zur Vorschubrichtung eine untergeordnete bzw. keine Rolle spielt. Die Ausrichtung stellt insbesondere die passgenaue Anordnung der Motive der zwei nebeneinander angeordneten Folien zu den Kavitäten dar, wobei neben der Ausrichtung in Vorschubrichtung auch eine Ausrichtung in einer Richtung senkrecht zur Vorschubrichtung eine Rolle spielt bzw. durchgeführt wird.

Ferner ist es von Vorteil, wenn in der ersten Phase die zumindest zwei nebeneinander angeordneten Folien mit einer höheren Folientransportdurchschnittsgeschwindigkeit und/oder über eine längere Folientransportstrecke als in der zweiten Phase ausgerichtet werden.

Auch ist es möglich, dass in der ersten Phase die Folientransportdurchschnittsgeschwindigkeit zwischen 1 mm/s und 1000 mm/s, bevorzugt zwischen 250 mm/s und 750 mm/s, weiter bevorzugt zwischen 450 mm/s und 550 mm/s, beträgt, und/oder die Folientransportstrecke zwischen 10 mm und 5000 mm, bevorzugt zwischen 1500 mm und 3500 mm, weiter bevorzugt zwischen 2500 mm und 3000 mm, beträgt.

Des Weiteren ist es bevorzugt, dass in der zweiten Phase die Folientransportdurchschnittsgeschwindigkeit zwischen 1 mm/s und 100 mm/s, bevorzugt zwischen 5 mm/s und 50 mm/s, beträgt, und/oder die Folientransportstrecke zwischen 3 mm und 50 mm, bevorzugt zwischen 3 mm und 10 mm, beträgt. Diese Folientransportstrecke in der zweiten Phase ist insbesondere abhängig von der Größe der Registermarke. Die Registermarken weisen bevorzugt eine Größe von etwa 3 mm x 3 mm bis 20 mm x 20 mm, insbesondere von etwa 3 mm x 3 mm bis 10 mm x 10 mm auf. Bei einer streifenförmigen "endlosen" Registermarke beträgt die Breite bevorzugt etwa 3 mm bis 20 mm, insbesondere etwa 3 mm bis 10 mm. Als streifenförmigen "endlosen" Registermarke werden insbesondere Registermarken verstanden, die sich als Streifen im Wesentlichen entlang der Folienbahnen, insbesondere in Vorschubrichtung, erstrecken. Bei den Registermarken kann Länge und Breite auch jeweils unterschiedlich sein, beispielsweise kann eine Registermarke auch eine Größe von 10 mm x 8 mm aufweisen.

Besonders bevorzugt ist es, wenn bei Erfassung der wenigstens einen Registermarke und/oder des wenigstens einen Motivs von der ersten auf die zweite Phase gewechselt wird. Hierdurch kann erreicht werden, dass die erste Phase ohne großen apparativen Aufwand schnell überwunden werden kann. Die in der ersten Phase zurückgelegte Strecke kann insbesondere eine Blindstrecke enthalten. Die Blindstrecke ist dabei bevorzugt geringer als die Folientransportstrecke der ersten Phase. Insbesondere beginnt die Blindstrecke mit dem Start der Folientransportstrecke der ersten Phase. Bevorzugt endet die Blindstrecke jedoch vor dem Ende der Folientransportstrecke der ersten Phase. Hierdurch wird eine sichere Erkennung der nächsten Registermarke am Ende der ersten Phase ermöglicht.

Sobald eine Registermarke und/oder Motiv erkannt wird, wird bevorzugt in die zweite Phase und damit in die exaktere Positionierungsgenauigkeit gewechselt und die Folientransportgeschwindigkeit verringert. Dabei beginnt die zweite Phase insbesondere an einer zuerst erkannten Außenkante einer Registermarke und endet insbesondere an einer zuletzt erkannten Außenkante einer Registermarke. Diese zuletzt erkannte Außenkante der Registermarke kann dabei bevorzugt aufgrund der geringen Folientransportgeschwindigkeit besonders genau detektiert werden.

Weiter ist es möglich, dass zwischen der ersten und der zweiten Phase eine Übergangsphase, insbesondere zum Beschleunigen und/oder zum Abbremsen der Folientransportdurchschnittsgeschwindigkeit, vorhanden ist.

Unter einer Blindstrecke wird bevorzugt ein vordefinierter Bereich zwischen zwei Registermarken und/oder Motiven verstanden, in welchem ein Sensor mögliche Signale nicht als Registermarken und/oder Positionsangaben interpretiert, sondern ignoriert bzw. vernachlässigt.

So ist es möglich, dass in der Blindstrecke vorhandene Dekorelemente oder Foliendesigns oder auch andere optische Merkmale nicht von dem Sensor erfasst werden. So ist es beispielsweise möglich, das die zwei nebeneinander angeordneten Folienbahnen in der Blindstrecke mit einer hohen Folientransportdurchschnittsgeschwindigkeit verfahren werden, bis eine erste Registermarkenkante der wenigstens einen Registermarke und/oder eine erste Motivkante des wenigstens einen Motivs erfasst wird. Nach Erfassen der ersten Registermarkenkante und/oder der ersten Motivkante wird in eine langsame Folientransportdurchschnittsgeschwindigkeit gewechselt. Bei Erreichen bzw. Erfassung einer zweiten Registermarkenkante der wenigstens einen Registermarke und/oder einer zweiten Motivkante des wenigstens einen Motivs wird dann der Folienbahnvorschub gestoppt.

Weiter ist es möglich, dass nach dem Stoppen des Folienbahnvorschubs die Folienbahnen um einen vorbestimmten Wert vor- und/oder zurückgefahren werden. Hierdurch kann einerseits eine genaue und effiziente Justierung erfolgen und andererseits kann so auf Fertigungstoleranzen der Folienbahnen individuell reagiert werden. Die Ermittlung des vorbestimmten Werts kann sowohl manuell wie auch automatisiert erfolgen, insbesondere durch eine Steuereinrichtung.

Zweckmäßig ist es, wenn die Ausrichtung der zumindest zwei nebeneinander angeordneten Folienbahnen anhand eines Vergleichs der Position der wenigstens einen Registermarke und/oder der Position des wenigstens einen Motivs mit der vorbestimmten Position der Kavitäten erfolgt. Unter vorbestimmt wird hierbei die ortsfeste Anordnung der Kavität im Spritzgusswerkzeug verstanden. Die vorbestimmte Position der Kavitäten kann entweder festgestellt werden durch Detektion einer festen Bauteilgeometrie, zum Beispiel einer Außen- oder Innenkante oder dergleichen, oder durch Detektion eines frei positionierbaren Elements an der Kavität, beispielsweise eines projizierten Laserleuchtpunkts oder eines Aufklebers oder eines ähnliches Elements, was auch umpositioniert werden kann, wenn nötig oder sinnvoll.

Es ist von Vorteil, dass nach passgenauer Anordnung je eines Motivs zu je einer Kavität jeweils ein Freigabesignal erzeugt wird. Hierdurch wird sichergestellt, dass ein Hinterspritzen der Motive auch wirklich erst dann erfolgt, wenn alle zu hinterspritzenden Motive der zwei nebeneinander angeordneten Folienbahnen jeweils in Bezug auf eine Kavität passgenau ausgerichtet sind. Hierdurch wird weiter für alle hergestellten Kunststoffformteile geringe Toleranzwerte und damit ein äußerst geringer Ausschuss erzielt. So ist es möglich, dass das Freigabesignal erst bei Abweichungen von weniger als ±0,1 mm, bevorzugt weniger als ±0,05 mm, in Vorschubrichtung und/oder in einer Richtung senkrecht zur Vorschubrichtung für jedes zu einer Kavität ausgerichtetes Motiv erzeugt wird.

Die Abweichungen umfassen bevorzugt mehrere verschiedene Toleranzen, insbesondere mechanische Toleranzen der Vorschubeinrichtung, Herstellungstoleranzen bei der Herstellung der Folienbahnen, insbesondere Drucktoleranzen sowie Materialeigenschaften der Folienbahnen, insbesondere deren Verdehnungskoeffizient.

Zweckmäßigerweise umfasst das Verfahren weiter zumindest einen der folgenden Schritte, welcher insbesondere nach Erzeugung der Freigabesignale durchgeführt wird:
- Schließen des Spritzgusswerkzeugs
- wenigstens bereichsweises Hinterspritzen der zu den Kavitäten passgenau angeordneten Motive der zumindest zwei nebeneinander angeordneten Folienbahnen mit einer Kunststoffmasse
- Öffnen des Spritzgusswerkzeugs
- Abziehen einer Trägerschicht der zumindest zwei nebeneinander angeordneten Folienbahnen von den hinterspritzten Motiven
- Entnahme eines Kunststoffformteils.

Vorzugsweise handelt es sich bei den Folienbahnen um Transferfolien, welche je eine Trägerschicht und eine Transferlage umfassen. Die Transferlage lässt sich von der Trägerschicht ablösen.

Es ist auch möglich, dass es sich bei den Folienbahnen um Laminierfolien handelt. Vorzugsweise umfasst das Spritzgusswerkzeug, insbesondere bei Ausführung der Folienbahnen als Laminierfolien, zumindest ein Stanzwerkwerkzeug, insbesondere zum Ausstanzen von der jeweiligen Kavität zugeordneten Folienbereichen aus den zumindest zwei nebeneinander angeordneten Folienbahnen. Vorzugsweise umfassen hierbei die der jeweiligen Kavität zugeordneten Folienbereiche je ein Motiv.

Vorteilhafterweise ist bei der Verarbeitung von Laminierfolien bevorzugt im oder am Spritzgusswerkzeug ein Stanzwerkzeug vorgesehen, wobei mittels des Stanzwerkzeugs die Laminierfolien derart ausgestanzt werden, dass zumindest ein der jeweiligen Kavität zugeordneter Folienbereich aus den ansonsten geschlossenen Folienbahnen lösbar ist. Dabei ist es vorteilhaft, wenn eine Stanzkontur des Stanzwerkzeugs zumindest bereichsweise der Außenkontur der jeweiligen Kavität folgt und jeder Kavität ein Stanzwerkzeug zugeordnet ist.

Weiter ist es auch möglich, unterschiedliche Folienbahnen zu verarbeiten, also beispielsweise mindestens eine Transfolienbahn und mindestens eine Laminierfolienbahn in unterschiedlichen Kavitäten des Spritzgusswerkzeugs. So ist es möglich, dass es sich bei zumindest einer der zumindest zwei nebeneinander angeordneten Folienbahnen um eine Transferfolie und bei einer zweiten der zumindest zwei nebeneinander angeordneten Folienbahnen um eine Laminierfolie handelt.

Vorzugsweise handelt es sich genau um ein Spritzgusswerkzeug, welches mindestens zwei Kavitäten aufweist. Vorzugsweise ist jeder Folienbahn mindestens eine Kavität zugeordnet. Weist das Spritzgusswerkzeug beispielsweise zwei Kavitäten auf, die insbesondere in Draufsicht in einer Richtung im Wesentlichen senkrecht zur Vorschubrichtung angeordnet sind, dann ist jeder Folienbahn genau eine Kavität zugeordnet. Weiter ist es möglich, dass das Spritzgusswerkzeug zwei oder mehrere Kavitäten aufweist, welche in Draufsicht in einer Richtung im Wesentlichen senkrecht zur Vorschubrichtung angeordnet sind.

Zweckmäßigerweise weist das Spritzgusswerkzeug in Vorschubrichtung ein oder mehrere weitere Kavitäten auf. Hierdurch wird erreicht, dass mehrere Motive je einer der zumindest zwei nebeneinander angeordneten Folienbahnen zu je einer Kavität, insbesondere gleichzeitig, passgenau angeordnet werden können. So ist es auch möglich, dass jeder Folienbahn mindestens zwei Kavitäten zugeordnet sind, welche in Vorschubrichtung hintereinander angeordnet sind.

Vorteilhafterweise sind die Kavitäten gemäß einem Raster, insbesondere gemäß einem ein- oder zweidimensionalen Raster, angeordnet. Die Rasterweite beträgt hierbei bevorzugt in Vorschubrichtung zwischen 1 mm und 100 mm, insbesondere bevorzugt zwischen 10 mm und 40 mm. Ferner beträgt die Rasterweite senkrecht zur Vorschubrichtung bevorzugt zwischen 10 mm und 2000 mm, insbesondere bevorzugt zwischen 100 mm und 1000 mm.

Ferner ist es möglich, dass das Spritzgusswerkzeug eine Klemmvorrichtung, insbesondere einen Klemmrahmen, und/oder eine Vakuumansaugung aufweist. Hierdurch wird eine Fixierung der Motive der zumindest zwei nebeneinander angeordneten Folienbahnen in den Kavitäten, insbesondere mit einer Toleranz von ±0,05 mm, bevorzugt ±0,02 mm, insbesondere bevorzugt ±0,01 mm, in Vorschubrichtung und/oder in einer Richtung senkrecht zur Vorschubrichtung erreicht.

Erfindungsgemäß weist die Vorschubeinrichtung wenigstens eine Justiereinrichtung, insbesondere zur Ausrichtung der zwei nebeneinander angeordneten Folienbahnen mit Motiven, auf. Vorteilhafterweise weist die Vorschubeinrichtung zwei Justiereinrichtungen auf, wobei jeweils eine Justiereinrichtung einer Folienbahn zugeordnet ist.

Erfindungsgemäß umfasst die Justiereinrichtung wenigstens einen Schrittmotor, insbesondere zur Ausrichtung der zwei nebeneinander angeordneten Folienbahnen oder zur Ausrichtung einer der zwei nebeneinander angeordneten Folienbahnen.

Vorteilhafterweise umfasst die Justiereinrichtung einen ersten Schrittmotor und einen zweiten Schrittmotor, wobei der erste Schrittmotor für die Ausrichtung einer oder beider Folienbahnen in Vorschubrichtung und der zweite Schrittmotor für die Ausrichtung einer oder beider Folienbahnen in einer Richtung senkrecht zur Vorschubrichtung ausgeformt ist.

Zweckmäßig weist der Schrittmotor eine kleinste Schrittweite von 0,005 mm, bevorzugt von 0,001 mm, auf. Weiter ist es sinnvoll, dass der Schrittmotor eine maximale Geschwindigkeit von 2000 mm/s aufweist. Hierdurch wird eine effiziente und genaue Ausrichtung der zwei nebeneinander angeordneten Folienbahnen mit Motiven ermöglicht.

Erfindungsgemäß weist die Justiereinrichtung einen oder mehrere Servomotoren zur Justierung der beiden Folienbahnen senkrecht zur Vorschubrichtung auf. Der oder die Servomotoren weisen bevorzugt eine maximale Geschwindigkeit von 2000 mm/s auf. Ein Servomotor kann unabhängig von einer festen Schrittlänge sehr genau positionieren, also festgelegte Positionen anfahren, und/oder sehr genau auf Steuerungssignale reagieren.

Je nach Ausbildung der Motive auf den Folienbahnen ist es möglich, zumindest auf eine der beiden Justierungen der Folienbahnen in Vorschubrichtung oder senkrecht zur Vorschubrichtung zu verzichten.

Beispielsweise kann das Motiv mehrere senkrecht zur Vorschubrichtung verlaufende parallele Streifen aufweisen, die in dieser Richtung größer als die jeweilige Kavität sind und insbesondere von Folienrand zu Folienrand verlaufen. In diesem Beispiel könnte auf die Justierung senkrecht zur Vorschubrichtung verzichtet werden, weil in dieser Richtung das Motiv praktisch "endlos", d.h. insbesondere ohne Unterbrechung bzw. kontinuierlich, vorliegt. In Vorschubrichtung ist dagegen in diesem Beispiel die Justierung nötig, weil in dieser Richtung die Passergenauigkeit des Motivs relativ zur jeweiligen Kavität benötigt wird.

Beispielsweise kann das Motiv mehrere in Vorschubrichtung verlaufende parallele Streifen aufweisen, die in dieser Richtung größer als die jeweilige Kavität sind. In diesem Beispiel könnte auf die Justierung in Vorschubrichtung verzichtet werden, weil in dieser Richtung das Motiv praktisch "endlos", d.h. insbesondere ohne Unterbrechung bzw. kontinuierlich, vorliegt. Senkrecht zur Vorschubrichtung ist dagegen in diesem Beispiel die Justierung nötig, weil in dieser Richtung die Passergenauigkeit des Motivs relativ zur jeweiligen Kavität benötigt wird.

Beispielsweise kann das Motiv einen Bereich aufweisen, der in allen Richtungen kleiner als die jeweilige Kavität ist, beispielsweise einen kreisförmigen oder auch rechteckigen Bereich. In diesem Beispiel müsste die jeweilige Folienbahn in Vorschubrichtung und auch senkrecht zur Vorschubrichtung justiert werden, weil in beiden Richtungen die Passergenauigkeit des Motivs relativ zur jeweiligen Kavität benötigt wird.

Weiter ist es auch möglich, dass die wenigstens eine Justiereinrichtung Teil der Folienabwickler und/oder der Folienaufwickler ist. Vorzugsweise sind die Justiereinrichtungen und/oder Folienabwickler und/oder Folienaufwickler derart ausgestaltet, dass mit diesen Folienbahnen mit einer Breite zwischen 10 mm und 2000 mm, bevorzugt zwischen 100 mm und 1000 mm, verarbeitet werden können.

Es ist von Vorteil, wenn die Vorschubeinrichtung und/oder das System mindestens eine Steuereinrichtung aufweist. Bevorzugt ist die Steuereinrichtung der Vorschubeinrichtung und/oder des Systems zur Steuerung des Vorschubs der zumindest zwei nebeneinander angeordneten Folienbahnen ausgestaltet, insbesondere zur Steuerung des voneinander unabhängigen Vorschubs der zumindest zwei nebeneinander angeordneten Folienbahnen.

Zweckmäßigerweise ist die Steuereinrichtung des Systems derart ausgestaltet, dass sie das Spritzgusswerkzeug steuert. Ferner ist es auch möglich, dass die Steuereinrichtung derart ausgebildet ist, dass die Steuereinrichtung das Spritzgusswerkzeug nach passgenauer Anordnung je eines Motivs zu je einer Kavität ansteuert, wodurch insbesondere ein Schließen des Spritzgusswerkzeugs erfolgt. Hierbei ist es von Vorteil, wenn die Ansteuerung erst erfolgt, wenn jeweils ein Freigabesignal nach passgenauer Anordnung je eines Motivs zu je einer Kavität erzeugt wurde.

Im Folgenden werden Ausführungsbeispiele der Erfindung exemplarisch unter Zuhilfenahme der beiliegenden, nicht maßstabgetreuen Figuren erläutert.
- Fig. 1: zeigt ein Flussdiagramm eines Verfahrens zum Verarbeiten von Folienbahnen
- Fig. 2a: zeigt ein Flussdiagramm eines Verfahrens zum Verarbeiten von Folienbahnen
- Fig. 2b: zeigt ein Diagramm, welches die Folientransportdurchschnittsgeschwindigkeiten spezifiziert
- Fig. 3: zeigt eine schematische Draufsicht auf ein System
- Fig. 4: zeigt eine schematische Draufsicht auf einen Ausschnitt eines Systems
- Fig. 5a: zeigt eine schematische Seitenansicht eines Systems
- Fig. 5b: zeigt eine schematische Draufsicht auf ein System
- Fig. 6a, 6b: zeigen schematische Darstellungen der Ausrichtung von Folienbahnen
- Fig. 7: zeigt eine schematische Ansicht einer Vorschubeinrichtung
- Fig. 8: zeigt eine schematische Draufsicht auf ein Motiv einer Folienbahn

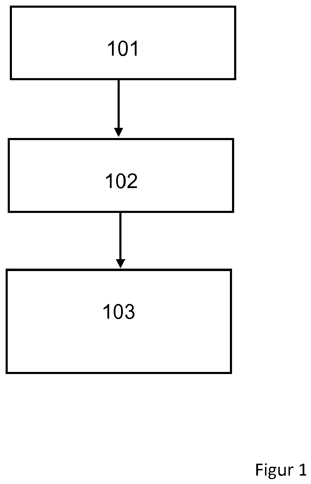

Figur 1 zeigt ein Flussdiagramm eines Verfahrens zum Verarbeiten von Folienbahnen, insbesondere IMD-Folienbahnen, umfassend eine Vorschubeinrichtung mit einer Vorschubrichtung.

In einem ersten Schritt 101 erfolgt das Bereitstellen von zwei in Richtung im Wesentlichen senkrecht zu der Vorschubrichtung nebeneinander angeordneten Folienbahnen mit Motiven.

Die Folienbahnen können bevorzugt einen ein- oder mehrschichtigen Aufbau aufweisen. Ferner kann es sich bei den Folienbahnen um Laminierfolien oder Transferfolien handeln.

Die Folienbahnen weisen bevorzugt eine Breite zwischen 10 mm und 2000 mm, insbesondere bevorzugt zwischen 100 mm und 1000 mm, auf. Die Breite wird hierbei bevorzugt in einer Richtung senkrecht zur Vorschubrichtung bestimmt. Weiter weisen die Folienbahnen insbesondere eine Gesamtlänge von 100 m bis 1000 m, insbesondere von 300 m bis 500 m auf. Die Folienbahnen weisen weiter bevorzugt eine Gesamtdicke zwischen 5 µm und 1000 µm auf.

Bevorzugt umfassen die Folienbahnen eine Trägerschicht. Bei der Trägerschicht handelt es sich vorzugsweise um eine PET-, PEN-, OPP-, BOPP-, PE- oder Celluloseacetat-Folie mit einer Stärke zwischen 5 µm und 250 µm.

Weiter können die Folienbahnen eine oder mehrere Dekorschichten aufweisen. Vorzugsweise sind die ein oder mehrere Dekorschichten musterförmig zur Ausbildung der Motive ausgeformt. Die Dekorschichten sind vorteilhafterweise ausgewählt aus der Gruppe: gedruckte Schicht, aufgedampfte Schicht, aufgalvanisierte Schicht, Replizierlackschicht, Reflexionsschicht, Schicht enthaltend optisch variable Pigmente, metallische Pigmente, Dünnfilmschichtaufbauten, Volumenhologrammschicht, Hologrammschicht.

Die Replizierlackschicht besteht bevorzugt aus einem thermoplastischen Lack, in den mittels Hitze und Druck durch Einwirkung eines Prägewerkzeugs eine Oberflächenstruktur abgeformt ist. Weiter ist es auch möglich, dass die Replizierlackschicht von einem UV-vernetzbaren Lack gebildet wird und die Oberflächenstruktur mittels UV-Replikation in die Replizierlackschicht abgeformt wird. Dabei wird die Oberflächenstruktur durch Einwirkung eines Prägewerkzeugs auf die ungehärtete Replizierlackschicht abgeformt und die Replizierlackschicht unmittelbar während oder nach der Abformung durch Bestrahlung mit UV-Licht gehärtet.

Die Replizierlackschicht besitzt vorzugsweise eine Schichtdicke zwischen 0,2 µm und 2 µm. Bei der in die Replizierlackschicht abgeformten Oberflächenstruktur handelt es vorzugsweise um eine diffraktive Oberflächenstruktur, beispielsweise um ein Hologramm, Kinegram^{®} oder um eine sonstige beugungsoptisch aktive Gitterstruktur. Solche Oberflächenstrukturen haben typischerweise eine Beabstandung der Strukturelemente im Bereich von 0,1 µm bis 4 µm. Weiter ist es auch möglich, dass die Oberflächenstruktur eine Beugungsstruktur Nullter Ordnung, ein Blaze-Gitter, ein vorzugsweise lineares oder gekreuztes sinusförmiges Beugungsgitter, ein lineares oder gekreuztes ein- oder mehrstufiges Rechteckgitter, eine asymmetrische Sägezahn-Reliefstruktur, eine lichtbeugende und/oder lichtbrechende und/oder lichtfokussierende Mikro- oder Nanostruktur, eine binäre oder kontinuierliche Fresnelllinse, eine binäre oder kontinuierliche Fresnel-Freiformfläche; eine diffraktive oder refraktive Makrostruktur, insbesondere Linsenstruktur oder Mikroprismenstruktur, eine Spiegelfläche oder Mattstruktur, insbesondere anisotrope oder isotrope Mattstruktur oder eine Kombinationsstruktur aus mehreren der vorgenannten Oberflächenstrukturen ist.

Bei der Reflexionsschicht handelt es sich vorzugsweise um eine Metallschicht aus Chrom, Gold, Kupfer, Silber oder einer Legierung solcher Metalle, die im Vakuum in einer Schichtdicke von 1 nm bis 150 nm aufgedampft wird. Es ist auch möglich, die Reflexionsschicht aus einem Lack mit elektrisch leitfähigen, metallischen Pigmenten herzustellen, insbesondere aufzudrucken und/oder aufzugießen. Weiter ist es auch möglich, dass die Reflexionsschicht von einer transparenten Reflexionsschicht gebildet wird, beispielsweise einer dünnen oder fein strukturierten metallischen Schicht oder einer HRI- oder LRI-Schicht (*engl*. high refraction index - HRI, low refraction index - LRI). Eine solche dielektrische Reflexionsschicht besteht beispielsweise aus einer aufgedampften Schicht aus einem Metalloxid, Metallsulfid, Titanoxid, etc. mit einer Dicke von 10 nm bis 150 nm. Bevorzugt ist die Reflexionsschicht musterförmig, insbesondere zur Ausbildung der Motive, ausgebildet.

Ferner können die Folienbahnen eine Ablöseschicht aufweisen. Die Ablöseschicht sorgt dafür, dass die eine oder mehrere Dekorschichten von der Trägerschicht zerstörungsfrei getrennt werden kann.

Die Ablöseschicht besteht bevorzugt aus Wachsen, Polyethylen (PE), Polypropylen (PP), Cellulose-Derivaten oder Poly(organo)siloxanen. Vorgenannte Wachse können natürliche Wachse, synthetische Wachse oder Kombinationen davon sein. Vorgenannte Wachse sind beispielsweise Carnauba-Wachse. Vorgenannte Cellulose-Derivate sind beispielsweise Celluloseacetat (CA), Cellulosenitrat (CN), Celluloseacetatbutyrat (CAB) oder Mischungen davon. Vorgenannte Poly(organo)siloxane sind beispielsweise Silicon-Bindemittel, Polysiloxan-Bindemittel oder Mischungen davon.

Des Weiteren können die Folienbahnen noch ein oder mehrere Schutzlackschichten aufweisen. Vorzugsweise weist die Schutzlackschicht eine Schichtdicke zwischen 0,1 µm und 50 µm, insbesondere zwischen 1 µm und 10 µm auf. Bei der Schutzlackschicht handelt es sich bevorzugt um eine Schicht aus PMMA, PVC und/oder Acrylat.

Die Schutzlackschicht kann als ein Schutzlack aus einem PMMA-basierenden Lack ausgebildet sein. Der Schutzlack kann auch aus einem strahlenhärtenden Dual Cure Lack bestehen. Dieser Dual Cure Lack kann in einem ersten Schritt beim und/oder nach dem Aufbringen in flüssiger Form thermisch vorvernetzt werden. Bevorzugt wird in einem zweiten Schritt, insbesondere nach der Verarbeitung der als Transferfolie ausgebildeten Folienbahnen, der Dual Cure Lack radikalisch nachvernetzt, insbesondere über energiereiche Strahlung, vorzugsweise UV-Strahlung. Dual Cure Lacke dieser Art können aus verschiedenen Polymeren oder Oligomeren bestehen, die ungesättigte Acrylat-, oder Methacrylat-Gruppen besitzen. Diese funktionellen Gruppen können insbesondere in dem zweiten Schritt radikalisch miteinander vernetzt werden. Zur thermischen Vorvernetzung im ersten Schritt ist von Vorteil, dass bei diesen Polymeren oder Oligomeren auch mindestens zwei oder mehrere Alkoholgruppen vorhanden sind. Diese Alkoholgruppen können mit multifunktionellen Isocyanaten oder Melaminformaldehydharzen vernetzt werden. Als ungesättigte Oligomere oder Polymere kommen bevorzugt verschiedene UV-Rohstoffe wie Epoxyacrylate, Polyetheracrylate, Polyesteracrylate und insbesondere Acrylatacrylate in Frage. Als Isocyanat können sowohl geblockte als auch ungeblockte Vertreter auf TDI (TDI = Toluol-2,4-diisocyanat), HDI (HDI = Hexamethylendiisocyanat) oder IPDI-Basis (IPDI = Isophorondiisocyanat) in Frage kommen. Die Melaminvernetzer können vollveretherte Versionen sein, können Imino-Typen sein oder Benzoguanamin-Vertreter darstellen.

Es kann auch vorgesehen sein, dass die Schutzlackschicht als ein Schutzlack aus einem auf PMMA (PMMA = Polymethylmethacrylat) basierenden Lack, oder einem Lack basierend auf einer Mischung aus PVDF (PVDF = Polyvinylidenfluorid) und PMMA, insbesondere mit einer Schichtdicke im Bereich von 15 µm bis 30 µm ausgebildet ist. Diese Lacke bringen die für eine Transferfolie und deren ausreichend genaue und saubere Ausprägbarkeit bzw. Trennbarkeit an den gewünschten Außengrenzen der übertragenen Flächenbereiche der Transferlagen notwendige mechanische Sprödigkeit mit.

Ferner können die Folienbahnen eine Grundierung aufweisen. Die Grundierung ist bevorzugt eine Kleberschicht und/oder Haftvermittlerschicht.

Es kann vorgesehen sein, dass die Grundierung mit einer Schichtdicke im Bereich von 1 µm bis 5 µm ausgebildet ist. Infrage kommende Rohstoffe für die Grundierung sind PMMA, PVC, Polyester, Polyurethane, chlorierte Polyolefine, Polypropylen, Epoxidharze oder Polyurethan-Polyole in Kombination mit inaktivierten Isocyanaten. Die Grundierungen können außerdem anorganische Füllstoffe enthalten.

Ein Motiv kann beispielsweise ein graphisch gestalteter Umriss, eine figürliche Darstellung, ein Bild, ein visuell erkennbares Designelement, ein Symbol, ein Logo, ein Portrait, ein Muster, ein alphanumerisches Zeichen, ein Text, eine farbliche Ausgestaltung und dergleichen sein.

In einem zweiten Schritt 102 erfolgt das Zuführen der nebeneinander angeordneten Folienbahnen in ein Spritzgusswerkzeug mit mindestens zwei Kavitäten, insbesondere mit mindestens zwei in Draufsicht in einer Richtung im Wesentlichen senkrecht zur Vorschubrichtung angeordneten Kavitäten.

In einem dritten Schritt 103 erfolgt das Ausrichten der zwei nebeneinander angeordneten Folienbahnen derart, dass je ein Motiv zu je einer Kavität passgenau angeordnet ist.

Die Verfahrensschritte werden bevorzugt entsprechend der oben genannten Reihenfolge durchgeführt.

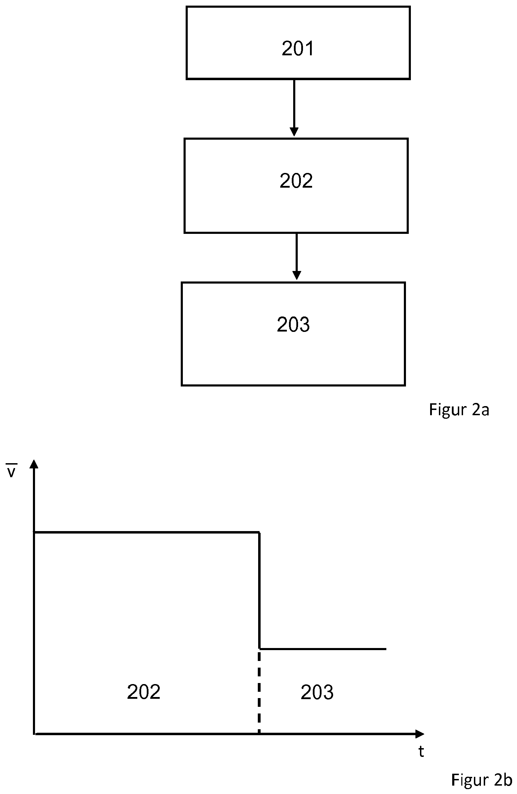

Figur 2a zeigt ein Flussdiagramm eines Verfahrens zum Verarbeiten von Folienbahnen. In einem ersten Schritt 201 erfolgt das Bereitstellen von zwei nebeneinander angeordneten Folienbahnen mit Motiven.

In einem zweiten Schritt 202 werden die Folienbahnen mit den Motiven in einer ersten Phase dem Spritzgusswerkzeug, insbesondere mittels einer Vorschubeinrichtung, zugeführt.

In einem dritten Schritt 203 werden die Folienbahnen derart ausgerichtet, dass je ein Motiv zu je einer Kavität passgenau angeordnet wird.

Die Phasen 202, 203 unterscheiden sich dabei insbesondere durch ihre Folientransportdurchschnittsgeschwindigkeit und/oder ihre Folientransportstrecke.

Figur 2b zeigt ein Diagramm, welches die Folientransportdurchschnittsgeschwindigkeiten spezifiziert. Wie in Figur 2b gezeigt, werden die zwei nebeneinander angeordneten Folien in der ersten Phase 202 mit einer höheren Folientransportdurchschnittsgeschwindigkeit als in der zweiten Phase 203 transportiert. In der zweiten Phase 203, mit der niedrigen Folientransportdurchschnittsgeschwindigkeit, erfolgt insbesondere die Ausrichtung der Motive in Vorschubrichtung und/oder in einer Richtung senkrecht zur Vorschubrichtung in Bezug auf die jeweiligen Kavitäten. Hierdurch wird erreicht, dass zum einen das Motiv schnell in den Bereich der Kavität eingebracht wird und zum anderen wird eine exakte Positionierung innerhalb der Kavität erzielt, so dass die Prozesszeiten weiter verringert werden können.

Die Folientransportdurchschnittsgeschwindigkeit in der ersten Phase 202 beträgt hierbei insbesondere zwischen 1 mm/s und 1000 mm/s, bevorzugt zwischen 250 mm/s und 750 mm/s, weiter bevorzugt zwischen 450 mm/s und 550 mm/s.

Die Folientransportdurchschnittsgeschwindigkeit in der zweiten Phase 203 beträgt insbesondere zwischen 1 mm/s und 100 mm/s, bevorzugt zwischen 5 mm/s und 50 mm/s.

Ferner ist es auch zweckmäßig, dass sich die Folientransportstrecken in der ersten Phase 202 und zweiten Phase 203 voneinander unterscheiden. Hierbei ist es von Vorteil, wenn die Folientransportstrecke der ersten Phase 202 größer als in der zweiten Phase 203 ist. Die Folientransportstrecke beträgt in der ersten Phase 202 insbesondere zwischen 10 mm und 5000 mm, bevorzugt zwischen 1500 mm und 3500 mm, weiter bevorzugt zwischen 2500 mm und 3000 mm.

Die Folientransportstrecke beträgt in der zweiten Phase 203 insbesondere zwischen 3 mm und 50 mm, bevorzugt zwischen 3 mm und 10 mm. Diese Folientransportstrecke in der zweiten Phase 203 ist insbesondere abhängig von der Größe der Registermarke. Die Registermarken weisen bevorzugt üblicherweise eine Größe von etwa 3 mm x 3 mm bis 20 mm x 20 mm, insbesondere von etwa 3 mm x 3 mm bis 10 mm x 10 mm auf. Bei einer streifenförmigen "endlosen" Registermarke beträgt die Breite bevorzugt etwa 3 mm bis 20 mm, insbesondere etwa 3 mm bis 10 mm. Bei den Registermarken kann Länge und Breite auch jeweils unterschiedlich sein, beispielsweise kann eine Registermarke auch eine Größe von 10 mm x 8 mm aufweisen.

Es ist vorteilhaft, wenn der Wechsel zwischen erster Phase 202 und zweiter Phase 203 bei Erfassung wenigstens einer Registermarke und/oder des wenigstens einen Motivs stattfindet. Hierdurch kann erreicht werden, dass die erste Phase 202 ohne großen apparativen Aufwand schnell überwunden werden kann. Die in der ersten Phase 202 zurückgelegte Strecke kann insbesondere eine Blindstrecke enthalten. Die Blindstrecke ist dabei bevorzugt geringer als die Folientransportstrecke der ersten Phase 202. Insbesondere beginnt die Blindstrecke mit dem Start der Folientransportstrecke der ersten Phase 202. Bevorzugt endet die Blindstrecke jedoch vor dem Ende der Folientransportstrecke der ersten Phase 202. Hierdurch wird eine sichere Erkennung der nächsten Registermarke am Ende der ersten Phase 202 ermöglicht. Sobald eine Registermarke und/oder Motiv erkannt wird, wird bevorzugt in die zweite Phase 203 und damit in die exaktere Positionierungsgenauigkeit gewechselt und die Folientransportgeschwindigkeit verringert. Dabei beginnt die zweite Phase 203 insbesondere an einer zuerst erkannten Außenkante einer Registermarke und endet insbesondere an einer zuletzt erkannten Außenkante einer Registermarke. Diese zuletzt erkannte Außenkante der Registermarke kann dabei bevorzugt aufgrund der geringen Folientransportgeschwindigkeit besonders genau detektiert werden.

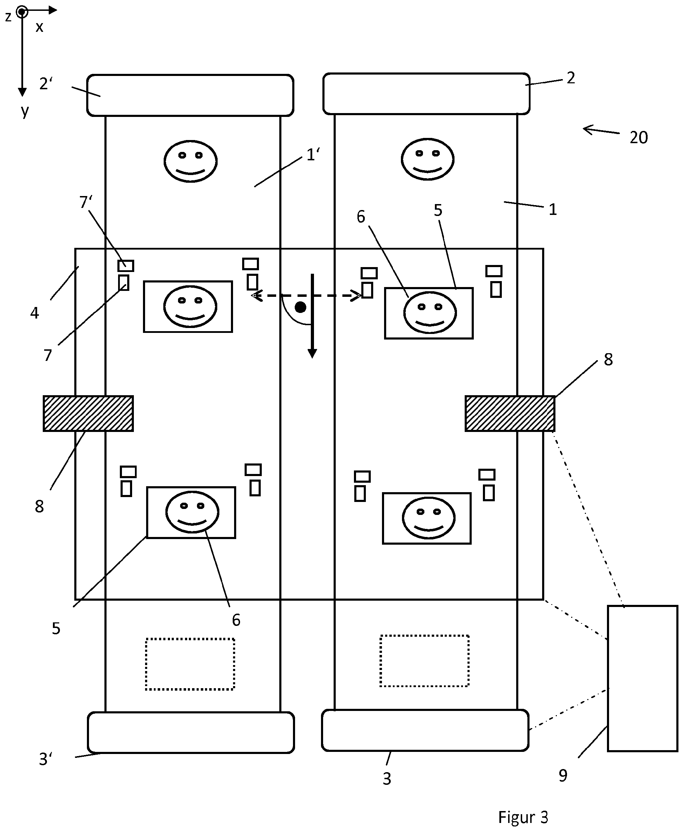

Figur 3 zeigt eine schematische Draufsicht auf ein System 10. Das System 10 weist eine Vorschubeinrichtung für Folienbahnen 1,1' auf. Die Vorschubeinrichtung umfasst zwei Folienabwickler 2, 2' und zwei Folienaufwickler 3, 3'. Hierbei ist, wie in Figur 3 gezeigt, ein Folienabwickler 2, 2' und ein Folienaufwickler 3, 3'jeweils einer Folienbahn 1,1' zugeordnet.

Die Vorschubeinrichtung weist eine Vorschubrichtung auf, die in Figur 3 mittels eines dicken Pfeils dargestellt ist. Unter Vorschubrichtung wird die Richtung verstanden, in der die Folienbahnen 1, 1' von den Folienabwicklern 2, 2' in Richtung der Folienaufwicklern 3, 3' geführt werden.

Wie in Figur 3 zudem gezeigt, sind die Folienabwickler 2, 2' und die Folienaufwickler 3, 3' in einer von einer x- und y-Koordinate aufgespannten Ebene angeordnet, so dass die zwischen den Folienab- 2, 2'- und Folienaufwicklern 3, 3' verlaufenden Folienbahnen 1,1' insbesondere entlang der y-Achse verlaufen, so dass auch die Vorschubrichtung in Richtung der y-Achse verläuft.

Unter Draufsicht wird hier eine Draufsicht auf die zwei nebeneinander angeordneten Folienbahnen 1,1' verstanden. Bei der Draufsicht wird, wie in Figur 3 gezeigt, das System 10 aus Richtung der Flächennormalen, also einer Richtung senkrecht zu einer von den zwei nebeneinander angeordneten Folienbahnen 1,1' aufgespannten Ebene und/oder in Schließ- und Öffnungsrichtung eines Spritzgusswerkzeugs 4 betrachtet. Liegen die zwei nebeneinander angeordneten Folienbahnen 1, 1', wie in Figur 3 dargestellt, in einer von der x- und y-Koordinate aufgespannten Ebene, so handelt es sich bei der Richtung der Draufsicht um eine z-Richtung.

Das in Figur 3 gezeigte Spritzgusswerkzeug 4 weist die Kavitäten 5 auf. Das Spritzgusswerkzeug 4 weist wenigstens zwei in Draufsicht in einer Richtung im Wesentlichen senkrecht zur Vorschubrichtung angeordnete Kavitäten 5 auf. Die Richtung im Wesentlichen senkrecht zur Vorschubrichtung ist in Figur 3 mit einem gestrichelten Doppelpfeil dargestellt. Ferner kann das Spritzgusswerkzeug 4 in Vorschubrichtung ein oder mehrere weitere Kavitäten 5 aufweisen. Das in Figur 3 gezeigte Spritzgusswerkzeug 4 weist zwei Kavitäten 5 in Vorschubrichtung und zwei Kavitäten 5 nebeneinander, also in einer Richtung senkrecht zur Vorschubrichtung auf. Somit können mit dem in Figur 3 gezeigten Spritzgusswerkzeug 4 gleichzeitig vier Kunststoffformteile hergestellt werden.

Vorteilhafterweise sind die Kavitäten 5 gemäß einem Raster, insbesondere gemäß einem ein- oder zweidimensionalen Raster, angeordnet. Die Rasterweite beträgt hierbei bevorzugt in Vorschubrichtung zwischen 1 mm und 100 mm, insbesondere bevorzugt zwischen 10 mm und 40 mm. Ferner beträgt die Rasterweite senkrecht zur Vorschubrichtung bevorzugt zwischen 10 mm und 2000 mm, insbesondere bevorzugt zwischen 100 mm und 1000 mm.

Ferner ist es möglich, dass das Spritzgusswerkzeug 4 eine Klemmvorrichtung, insbesondere einen Klemmrahmen, und/oder eine Vakuumansaugung aufweist. Hierdurch wird eine Fixierung der Motive 6 der zwei nebeneinander angeordneten Folienbahnen 1, 1' in den Kavitäten 5, insbesondere mit einer Toleranz von ±0,05 mm, bevorzugt ±0,02 mm, insbesondere bevorzugt ±0,01 mm, in Vorschubrichtung und/oder in einer Richtung senkrecht zur Vorschubrichtung erreicht.

Die Motive 6 können bevorzugt größer als die Kavitäten 5 ausgebildet sein. Vorzugsweise sind die Motive 6 um mindestens 1 % größer als die Kavitäten 5 ausgebildet. So ist es möglich, dass die Motive 6 je eine Kavität 5 in jede Richtung, bevorzugt zwischen 1 mm und 20 mm, überragen.

Weiter ist es auch möglich, dass die Folienbahn 1,1' und/oder die Folienbahnen 1, 1', anders als es in Figur 3 gezeigt ist, unterschiedliche Motive 6 aufweisen. Bei den Motiven 6 kann es sich sowohl um Einzelbilder als auch um Endlosmotive handeln.

Die in Figur 3 gezeigten Folienbahnen 1,1' weisen Registermarken 7, 7' auf. Bevorzugt erfolgt die Ausrichtung der Folienbahnen 1,1' anhand der Registermarken 7, 7'.

Vorzugsweise sind die Registermarken 7, 7' so ausgebildet, dass mittels diesen die Positionen in Vorschubrichtung und/oder in eine Richtung senkrecht zur Vorschubrichtung der zwei nebeneinander angeordneten Folienbahnen 1,1' bestimmt werden können.

Wie in Figur 3 gezeigt, sind jedem Motiv 6 zwei Registermarken 7, 7' zugeordnet. Hierdurch kann mittels einer der Registermarken 7 die Position des zugeordneten Motivs 6 in Vorschubrichtung und mittels der anderen Registermarke 7' die Position des zugeordneten Motivs 6 in eine Richtung senkrecht zur Vorschubrichtung bestimmt werden.

Weiter ist es auch möglich, dass eine einzige Registermarke 7, 7' je einem Motiv 6 zugeordnet ist, so dass mittels dieser Registermarke 7, 7' die Position des zugeordneten Motivs 6 in Vorschubrichtung und in eine Richtung senkrecht zur Vorschubrichtung bestimmt werden kann.

Zweckmäßig ist hierbei, dass der Abstand der Registermarken 7, 7' zu dem zugeordneten Motiv 6 möglichst gering ist, insbesondere dass der Abstand zwischen 5 mm und 500 mm, insbesondere zwischen 15 mm und 200 mm liegt.

Wie in Figur 3 gezeigt, sind die Registermarken 7, 7' vorteilhafterweise jeweils an mindestens einem Seitenrand der zwei nebeneinander angeordneten Folienbahnen 1, 1' in Vorschubrichtung angeordnet. Es ist auch denkbar, dass die Registermarken 7, 7' jeweils an beiden Seitenrändern der zwei nebeneinander angeordneten Folienbahnen 1,1' in Vorschubrichtung angeordnet sind. Auch können die zwei nebeneinander angeordneten Folienbahnen 1,1' auf beiden bzw. sich gegenüberliegenden Seiten Registermarken 7, 7' aufweisen.

Die Registermarke 7, 7' ist auf keine feste Geometrie festgelegt. Wie in Figur 3 gezeigt, handelt es sich vorteilhafterweise um rechteckige Registermarken 7, 7'. Weiter ist es aber auch möglich, dass die Registermarke 7, 7' als Punkt, Kreuzmarke, Pfeil, Mehreck oder Quadrat ausgebildet ist. Ferner ist es möglich, dass die Registermarke 7, 7' als Streifen ausgebildet ist, der sich im Wesentlichen entlang der Folienbahnen 1, 1', insbesondere in Vorschubrichtung, erstreckt.

Das System 10 weist weiter wenigstens einen Sensor 8 zur Erfassung von wenigstens einer Registermarke 7, 7' und/oder wenigstens eines Motivs 6 auf.

Hierbei ist es möglich, dass es sich bei dem Sensor 8 um einen Durchlicht- und/oder Auflichtsensor handelt. Vorzugsweise handelt es sich bei dem Durchlichtsensor um eine Gabellichtschranke und bei dem Auflichtsensor um einen Reflexionssensor.

Vorteilhafterweise weist der wenigstens eine Sensor 8 von den Kavitäten 5 einen Abstand zwischen 5 mm und 200 mm, bevorzugt zwischen 15 mm und 50 mm, auf. Hierdurch kann die Positionierungsgenauigkeit der Motive 6 weiter erhöht werden.

Wie in Figur 3 gezeigt, ist der wenigstens eine Sensor 8 derart angeordnet, dass dieser im Wesentlichen Bereiche einer Folienbahn 1, insbesondere Randbereiche einer Folienbahn 1 erfasst, wobei die Bereiche in Draufsicht jeweils auf einer von der anderen Folienbahn 1' abgewandten Seite der einen Folienbahn 1 liegen. Hierdurch wird ein störender Einfluss der Sensoren 8, insbesondere im Hinblick auf das Spritzgusswerkzeug 4 vermieden. Insbesondere wird hierdurch ein Kollidieren der Sensoren 8 beim Öffnen und Schließen des Spritzgusswerkzeugs 4 mit dem Spritzgusswerkzeug 4 vermieden.

Weiter weist das System 10, wie in Figur 3 gezeigt, mindestens eine Steuereinrichtung 9 auf. Bevorzugt ist die Steuereinrichtung 9 des Systems 10 zur Steuerung des Vorschubs der zwei nebeneinander angeordneten Folienbahnen 1,1' ausgestaltet. Zweckmäßigerweise ist die Steuereinrichtung 9 des Systems 10 derart ausgestaltet, dass sie das Spritzgusswerkzeug 4 steuert. Ferner ist es auch möglich, dass die Steuereinrichtung 9 derart ausgebildet ist, dass die Steuereinrichtung 9 das Spritzgusswerkzeug 4 nach passgenauer Anordnung je eines Motivs 6 zu je einer Kavität 5 ansteuert, wodurch insbesondere ein Schließen des Spritzgusswerkzeugs 4 erfolgt.

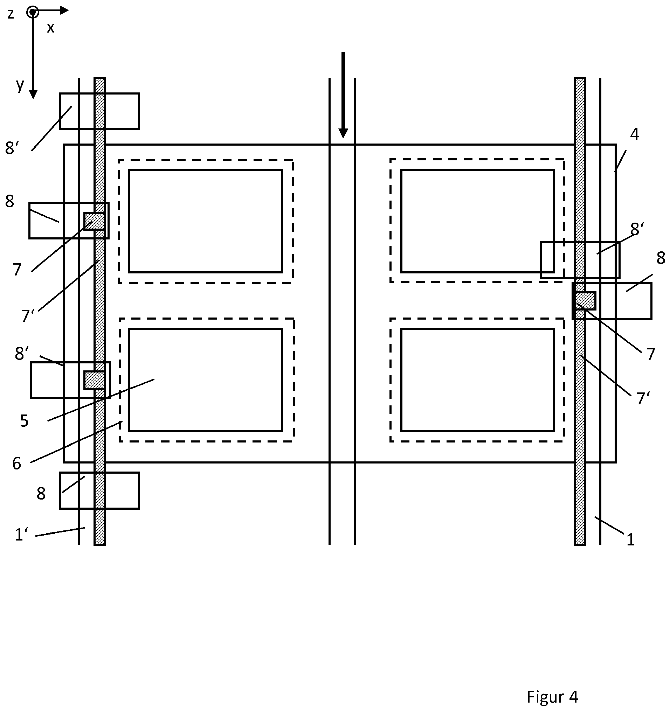

Figur 4 zeigt eine schematische Draufsicht auf einen Ausschnitt eines Systems 10. Wie in Figur 4 gezeigt weisen die Folienbahnen 1, 1' die Registermarken 7, 7' auf. Die Registermarke 7 dient der Erfassung der Position der einzelnen Folienbahnen 1, 1' in Vorschubrichtung. Die Registermarke 7' dient der Erfassung der Position der einzelnen Folienbahnen 1, 1' in einer Richtung senkrecht zur Vorschubrichtung. Wie in Figur 4 gezeigt, heißt dies, dass die Registermarke 7 der Erfassung der Position der einzelnen Folienbahnen 1, 1' in y-Richtung und die Registermarke 7' der Erfassung der Position der einzelnen Folienbahnen 1, 1' in x-Richtung dient. Hierzu weist, wie in Figur 4 gezeigt, das System 10 die Sensoren 8, 8' auf. Jeder Sensor 8, 8' ist bevorzugt einer Registermarke 7, 7' zugeordnet. Dies bedeutet bevorzugt, dass der Sensor 8 zur Erfassung der Registermarke 7 dient und der Sensor 8' zur Erfassung der Registermarke 7' dient. Wie in Figur 4 ersichtlich, können die Sensoren 8, 8' zur Erfassung der Registermarken 7, 7' unterschiedlich angeordnet sein. Für die Sensoren 8, 8' können innerhalb des Spritzgusswerkzeugs 4 Aussparungen vorhanden sein.

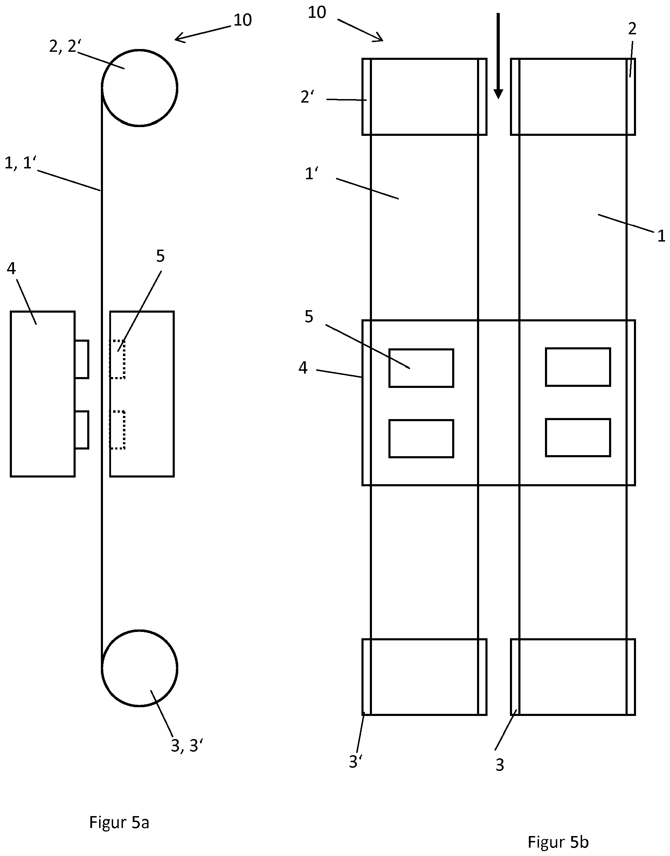

Figur 5a zeigt eine schematische Seitenansicht des Systems 10. Figur 5b zeigt eine schematische Draufsicht auf das System 10. Das System 10 weist die Vorschubeinrichtung für Folienbahnen 1, 1' auf. Die Vorschubeinrichtung umfasst die zwei Folienabwickler 2, 2' und die zwei Folienaufwickler 3, 3'. Hierbei ist, wie in Figur 5b gezeigt, ein Folienabwickler 2, 2' und ein Folienaufwickler 3, 3' jeweils einer Folienbahn 1,1' zugeordnet.

Das in Figur 5a und 5b gezeigte Spritzgusswerkzeug 4 weist die Kavitäten 5 auf. Das Spritzgusswerkzeug 4 weist zwei in Draufsicht in einer Richtung im Wesentlichen senkrecht zur Vorschubrichtung angeordnete Kavitäten 5 auf. Ferner weist das in Figur 5a bzw. 5b gezeigte Spritzgusswerkzeug 4 zwei Kavitäten 5 in Vorschubrichtung Somit können mit dem in Figur 5a bzw. Figur 5b gezeigten Spritzgusswerkzeug 4 gleichzeitig vier Kunststoffformteile hergestellt werden.

Wie in Figur 5a erkennbar, weist das Werkzeug zwei Werkzeughälften auf. Zwischen den zwei Werkzeughälften verlaufen die Folienbahnen 1, 1' mit Motiven 6.

Zweckmäßigerweise erfolgt nach passgenauer Anordnung der Motive 6 zu den jeweiligen Kavitäten 5 weiter zumindest einer der folgenden Schritte, welcher insbesondere nach Erzeugung der Freigabesignale durchgeführt wird:
- Schließen des Spritzgusswerkzeugs 4
- wenigstens bereichsweises Hinterspritzen der zu den Kavitäten 5 passgenau angeordneten Motive 6 der nebeneinander angeordneten Folienbahnen 1, 1' mit einer Kunststoffmasse
- Öffnen des Spritzgusswerkzeugs 4
- Abziehen einer Trägerschicht der zumindest zwei nebeneinander angeordneten Folienbahnen 1,1' von den hinterspritzten Motiven 6
- Entnahme eines Kunststoffformteils.

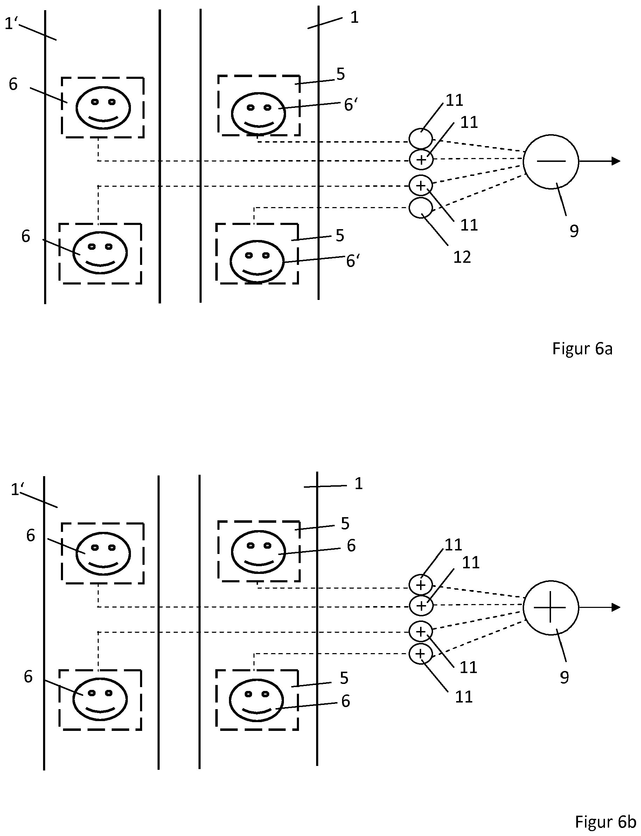

Figur 6a zeigt eine schematische Darstellung der Ausrichtung von Folienbahnen 1, 1'.

So sind in Fig. 6a die beiden nebeneinander angeordneten Folienbahnen 1,1' mit den Motiven 6, 6' gezeigt. Bezüglich der Ausgestaltung der Folienbahnen 1, 1' und der Motive 6, 6' wird auf obige Ausführungen verwiesen.

Figur 6a zeigt die Erzeugung von Freigabesignalen, wobei jeder Kavität 5 je ein gesondertes Freigabesignal 11 zugeordnet ist. Die Freigabesignale 11 werden jeweils erst dann erzeugt, wenn das entsprechende Motiv 6 in der jeweiligen Kavität 5 passgenau angeordnet ist.

So ist es möglich, dass das Freigabesignal 11 erst bei Abweichungen von weniger als ±0,1 mm, bevorzugt weniger als ±0,05 mm, in Vorschubrichtung und/oder in einer Richtung senkrecht zur Vorschubrichtung für jedes zu einer Kavität 5 ausgerichtetes Motiv 6 erzeugt wird.

Bevorzugt umfassen die Abweichungen mehrere verschiedene Toleranzen, insbesondere mechanische Toleranzen der Vorschubeinrichtung, Herstellungstoleranzen bei der Herstellung der Folie, insbesondere Drucktoleranzen sowie Materialeigenschaften der Folie, insbesondere deren Verdehnungskoeffizient.

Wie in Figur 6a gezeigt, sind zwei von vier Motiven 6 passgenau zu den entsprechenden Kavitäten 5 angeordnet, so dass für diese bereits jeweils ein Freigabesignal 11 vorliegt. Die Motive 6' sind hingegen nicht passgenau zu der den Motiven 6' zugeordneten Kavitäten 5 angeordnet, so dass hier kein Freigabesignal 12 vorliegt. Da nicht sämtliche Freigabesignale 11 erzeugt wurden, startet die Steuereinrichtung 9 den Hinterspritzvorgang noch nicht. Vorzugsweise sorgt die Steuereinrichtung 9 für das weitere notwendige Ausrichtung der Folienbahn 1, so dass auch die Motive 6' passgenau zu den entsprechenden Kavitäten 5 angeordnet sind.

Wie in Figur 6b gezeigt, sind alle vier Motive 6 passgenau zu den entsprechenden Kavitäten 5 angeordnet, so dass für alle ein Freigabesignal 11 vorliegt. Die Steuereinrichtung 9 erfasst die Freigabesignale 11 und startet den Hinterspritzvorgang.

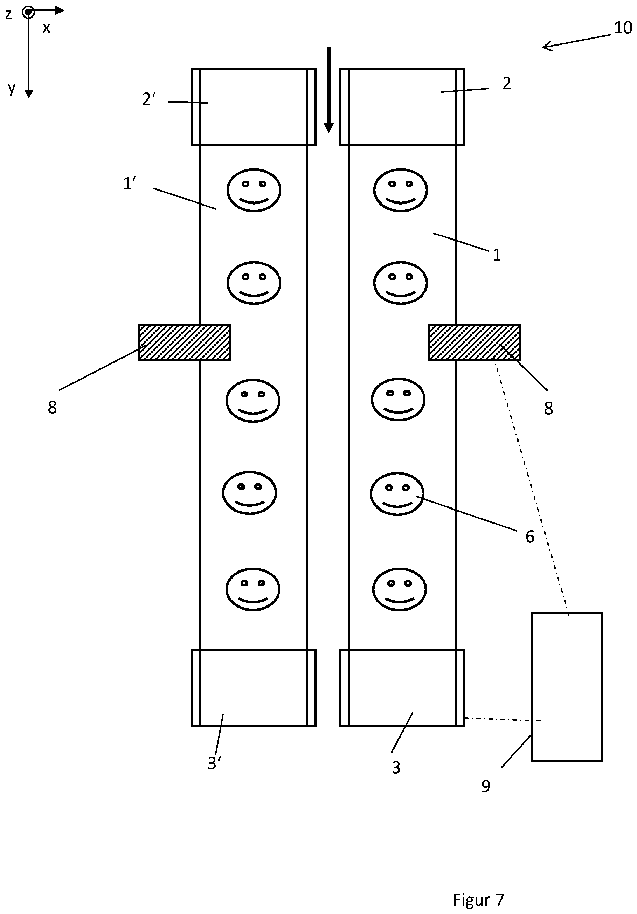

Figur 7 zeigt eine schematische Ansicht einer Vorschubeinrichtung 20.

Mit der in Figur 7 gezeigten Vorschubeinrichtung 20 werden zwei in einer Richtung im Wesentlichen senkrecht zur Vorschubrichtung nebeneinander angeordneten Folienbahnen 1, 1' mit Motiven 6 in Vorschubrichtung transportiert. Die Vorschubeinrichtung 20 umfasst zwei Folienabwickler 2, 2' und zwei Folienaufwickler 3,3', wobei je ein Folienabwickler 2, 2' und ein Folienaufwickler 3, 3' einer Folienbahn 1,1' zugeordnet ist.

Die Vorschubeinrichtung 20 ist vorzugsweise derart ausgebildet, dass die zwei nebeneinander angeordneten Folienbahnen 1,1' unabhängig voneinander bereitgestellt, zugeführt und/oder ausgerichtet werden können. Hierdurch wird eine hohe Passgenauigkeit der Motive 6 zu den Kavitäten für jede Folienbahn 1,1' erreicht. So ist es möglich, auf zueinander unterschiedliche Motive 6 der Folienbahnen 1,1' und/oder auf unterschiedliche Toleranzen der Motive 6 der Folienbahnen 1,1' individuell zu reagieren. Hierdurch wird die Passgenauigkeit weiter gesteigert.

Es ist aber auch möglich, dass die zwei nebeneinander angeordneten Folienbahnen 1,1' synchron bereitgestellt, zugeführt und/oder ausgerichtet werden.

Weiter weist die in Figur 7 gezeigte Vorschubeinrichtung 20 wenigstens eine Justiereinrichtung, insbesondere zur Ausrichtung der zwei nebeneinander angeordneten Folienbahnen 1, 1' auf. Vorteilhafterweise weist die Vorschubeinrichtung 20 zwei Justiereinrichtungen auf, wobei jeweils eine Justiereinrichtung einer Folienbahn 1,1' zugeordnet ist.

Vorzugsweise umfasst die Justiereinrichtung wenigstens einen Schrittmotor, insbesondere zur Ausrichtung der zwei nebeneinander angeordneten Folienbahnen 1,1' oder zur Ausrichtung einer der zwei nebeneinander angeordneten Folienbahnen 1, 1'. Vorteilhafterweise umfasst die Justiereinrichtung einen ersten und einen zweiten Schrittmotoren, wobei der erste Schrittmotor für die Ausrichtung einer oder beider Folienbahnen 1, 1' in Vorschubrichtung und der zweite Schrittmotor für die Ausrichtung einer oder beider Folienbahnen 1, 1' in einer Richtung senkrecht zur Vorschubrichtung ausgeformt ist.

Zweckmäßig weist der Schrittmotor hierbei eine kleinste Schrittweite von 0,005 mm, bevorzugt 0,001 mm, auf. Weiter ist es sinnvoll, dass der Schrittmotor eine maximale Geschwindigkeit von 2000 mm/s aufweist. Hierdurch wird eine effiziente und genaue Ausrichtung der zwei nebeneinander angeordneten Folienbahnen 1, 1' mit Motiven 6 ermöglicht.

Alternativ zum Schrittmotor kann die Justiereinrichtung auch einen Servomotor mit einer eine maximale Geschwindigkeit von 2000 mm/s aufweisen. Ein Servomotor kann unabhängig von einer festen Schrittlänge sehr genau positionieren, also festgelegte Positionen anfahren und/oder sehr genau auf Steuerungssignale reagieren.

Weiter ist es auch möglich, dass die wenigstens eine Justiereinrichtung Teil der Folienabwickler 2, 2' und/oder der Folienaufwickler 3, 3' ist.

Die in Figur 7 gezeigte Vorschubeinrichtung 20 weist weiter wenigstens einen Sensor 8, insbesondere zur Erfassung von Registermarken 7, 7' und/oder Motiven 6, auf. Bezüglich der Ausgestaltung und/oder Anordnung des Sensors 8 ist hier auf obige Ausführung verwiesen.

Es ist von Vorteil, wenn die Vorschubeinrichtung 20 mindestens eine Steuereinrichtung 9 aufweist. Bevorzugt ist die Steuereinrichtung 9 der Vorschubeinrichtung 20 zur Steuerung des Vorschubs der zwei nebeneinander angeordneten Folienbahnen 1,1' ausgestaltet, insbesondere zur Steuerung des voneinander unabhängigen Vorschubs der zwei nebeneinander angeordneten Folienbahnen 1, 1'.

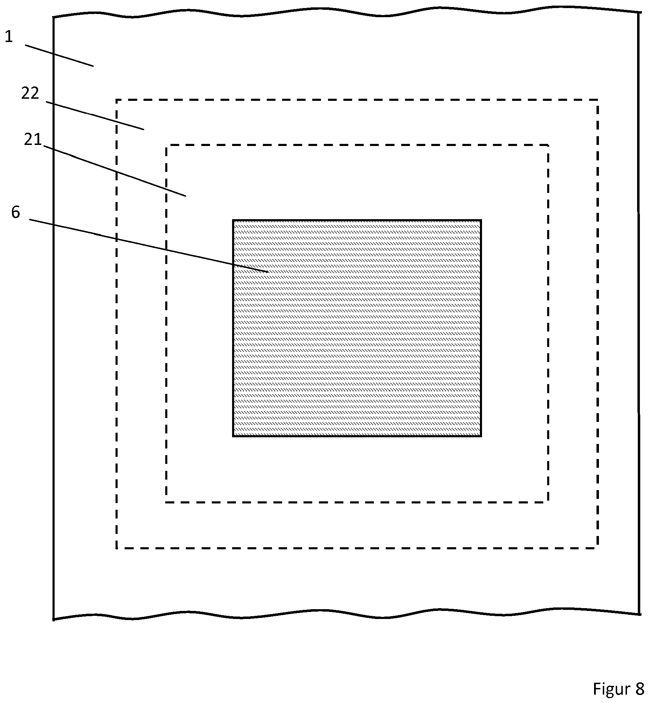

Figur 8 zeigt eine schematische Draufsicht auf ein Motiv 6 einer Folienbahn 1. Das Motiv 6 kann beispielsweise ein graphisch gestalteter Umriss, eine figürliche Darstellung, ein Bild, ein visuell erkennbares Designelement, ein Symbol, ein Logo, ein Portrait, ein Muster, ein alphanumerisches Zeichen, ein Text, eine farbliche Ausgestaltung und dergleichen sein.

Die Folienbahn 1 weist einen motivfreien Bereich auf. Das Motiv 6 ist von dem motivfreien Bereich umgeben. Insbesondere ist der motivfreie Bereich jeweils zwischen den Motiven 6 und den Seitenrändern der Folienbahnen 1 und/oder zwischen den Motiven ausgebildet. Der motivfreie Bereich bildet daher bevorzugt einen Rahmen, insbesondere einen umlaufenden Rahmen, um ein jeweiliges Motiv 6. Bevorzugt beträgt die Breite des motivfreien Bereichs zwischen 10 mm und 550 mm, insbesondere zwischen 25 mm und 300 mm.

Der motivfreie Bereich weist, wie in Figur 8 gezeigt, bevorzugt einen ersten Teilbereich 21 und einen zweiten Teilbereich 22 auf, wobei insbesondere der erste Teilbereich 21 Platz für die Positionierung einer Klemmvorrichtung, insbesondere eines Klemmrahmens, bildet und/oder der zweite Teilbereich 22 Platz für die Positionierung von Registermarken bildet.

Wie in Figur 8 gezeigt, ist der erste Teilbereich 21 sowohl direkt benachbart zum Motiv 6 als auch unmittelbar an das Motiv 6 angrenzend angeordnet. Hierdurch wird eine Fixierung der Folienbahnen mittels einer Klemmvorrichtung möglichst nah am Motiv 6 erreicht. wodurch Störfaktoren wie Foliendehnungen, Faltenbildung etc. minimiert werden. Der zweite Teilbereich 22 und das Motiv 6 sind, wie in Figur 8 gezeigt, beabstandet zueinander angeordnet. Der erste Teilbereich 21 ist zwischen Motiv 6 und zweitem Teilbereich 22 angeordnet. Hierdurch können die im zweiten Teilbereich 22 bevorzugt angeordneten Registermarken leichter von Sensoren erfasst werden bzw. ist eine leichtere Positionierung der Sensoren möglich.

Der erste Teilbereich 21 weist dabei bevorzugt eine Breite zwischen 5 mm und 500 mm, insbesondere bevorzugt zwischen 15 mm und 200 mm, auf. Der zweite Teilbereich 22 weist dabei bevorzugt eine Breite zwischen 5 mm und 50 mm, insbesondere bevorzugt zwischen 15 mm und 30 mm, auf.

### Bezugszeichenliste

- 1, 1': Folienbahnen
- 2, 2': Folienabwickler
- 3, 3': Folienaufwickler
- 4: Spritzgusswerkzeug
- 5: Kavität
- 6, 6': Motiv
- 7, 7': Registermarken
- 8: Sensor
- 9: Steuereinrichtung
- 10: System
- 11: Freigabesignal
- 12: kein Freigabesignal
- 20: Vorschubeinrichtung
- 21, 22: Teilbereiche
- 101, 102, 103, 201, 202, 203: Schritte

## Patentansprüche

1. Verfahren zum Verarbeiten von Folienbahnen (1, 1'), insbesondere IMD-Folienbahnen (1, 1'), mittels einer Vorschubeinrichtung (20) mit einer Vorschubrichtung, wobei die Vorschubeinrichtung (20) wenigstens eine Justiereinrichtung aufweist, und wobei die Justiereinrichtung einen Schrittmotor oder ein oder mehrere Servomotoren zur Justierung der beiden Folienbahnen (1, 1') senkrecht zur Vorschubrichtung aufweist, und einem Spritzgusswerkzeug (4) mit mindestens zwei Kavitäten (5), wobei das Verfahren folgende Schritte aufweist:
- Bereitstellen von zumindest zwei in Richtung im Wesentlichen senkrecht zur Vorschubrichtung nebeneinander angeordneten Folienbahnen (1, 1') mit Motiven (6),
- Zuführen der zumindest zwei nebeneinander angeordneten Folienbahnen (1, 1') in das Spritzgusswerkzeug (4),
- Ausrichten der zumindest zwei nebeneinander angeordneten Folienbahnen (1, 1') derart, dass je ein Motiv (6) zu je einer Kavität (5) passgenau angeordnet ist,
und wobei die Ausrichtung oder Zuführung der zumindest zwei nebeneinander angeordneten Folienbahnen (1, 1') jeweils anhand von wenigstens einer Registermarke (7, 7') erfolgt,
und wobei die zumindest zwei nebeneinander angeordneten Folienbahnen (1, 1') unabhängig voneinander bereitgestellt, zugeführt und/oder ausgerichtet werden.

2. Verfahren nach dem Anspruch 1,
**dadurch gekennzeichnet,**
**dass** die Ausrichtung und Zuführung der zumindest zwei nebeneinander angeordneten Folienbahnen (1, 1') jeweils anhand von wenigstens einer Registermarke (7, 7') erfolgt.

3. Verfahren zum Verarbeiten von Folienbahnen (1, 1'), insbesondere IMD-Folienbahnen (1, 1'), mittels einer Vorschubeinrichtung (20) mit einer Vorschubrichtung, wobei die Vorschubeinrichtung (20) wenigstens eine Justiereinrichtung aufweist, und wobei die Justiereinrichtung einen Schrittmotor oder ein oder mehrere Servomotoren zur Justierung der beiden Folienbahnen (1, 1') senkrecht zur Vorschubrichtung aufweist, und einem Spritzgusswerkzeug (4) mit mindestens zwei Kavitäten (5), wobei das Verfahren folgende Schritte aufweist:
- Bereitstellen von zumindest zwei in Richtung im Wesentlichen senkrecht zur Vorschubrichtung nebeneinander angeordneten Folienbahnen (1, 1') mit Motiven (6),
- Zuführen der zumindest zwei nebeneinander angeordneten Folienbahnen (1, 1') in das Spritzgusswerkzeug (4),
- Ausrichten der zumindest zwei nebeneinander angeordneten Folienbahnen (1, 1') derart, dass je ein Motiv (6) zu je einer Kavität (5) passgenau angeordnet ist,
und wobei die Ausrichtung oder Zuführung der zumindest zwei nebeneinander angeordneten Folienbahnen (1, 1') jeweils anhand wenigstens eines Motives (6) je einer der zumindest zwei nebeneinander angeordneten Folienbahnen (1, 1') erfolgt,
und wobei die zumindest zwei nebeneinander angeordneten Folienbahnen (1, 1') unabhängig voneinander bereitgestellt, zugeführt und/oder ausgerichtet werden.

4. Verfahren nach Anspruch 3,
**dadurch gekennzeichnet,**
**dass** die Ausrichtung und Zuführung der zumindest zwei nebeneinander angeordneten Folienbahnen (1, 1') jeweils anhand wenigstens eines Motives (6) je einer der zumindest zwei nebeneinander angeordneten Folienbahnen (1, 1') erfolgt.

5. Verfahren nach einem der vorangehenden Ansprüche,
**dadurch gekennzeichnet,**
**dass** die Ausrichtung der zumindest zwei nebeneinander angeordneten Folienbahnen (1, 1') anhand eines Vergleichs der Position der wenigstens einen Registermarke (7, 7') und/oder der Position des wenigstens einen Motivs (6) mit der vorbestimmten Position der Kavitäten (5) erfolgt.

6. Verfahren nach einem der vorangehenden Ansprüche,
**dadurch gekennzeichnet,**
**dass** das Spritzgusswerkzeug (4) in Vorschubrichtung ein oder mehrere weitere Kavitäten (5) aufweist, so dass mehrere Motive (6) je einer der zumindest zwei nebeneinander angeordneten Folienbahnen (1, 1') zu je einer Kavität (5), insbesondere gleichzeitig, passgenau angeordnet werden.

7. Verfahren nach einem der vorangehenden Ansprüche,
**dadurch gekennzeichnet,**
**dass** das Zuführen und/oder die Ausrichtung der zumindest zwei nebeneinander angeordneten Folien (1, 1') eine erste und/oder eine zweite Phase (202, 203) umfasst, wobei sich die Phasen (202, 203) insbesondere durch die Folientransportdurchschnittsgeschwindigkeit und/oder Folientransportstrecke unterscheiden, insbesondere dass in der ersten Phase (202) die zumindest zwei nebeneinander angeordneten Folienbahnen (1, 1') mit einer höheren Folientransportdurchschnittsgeschwindigkeit und/oder über eine längere Folientransportstrecke als in der zweiten Phase (203) ausgerichtet werden.

8. Verfahren nach Anspruch 7,
**dadurch gekennzeichnet,**
**dass** in der ersten Phase (202) die Folientransportdurchschnittsgeschwindigkeit zwischen 1 mm/s und 1000 mm/s, bevorzugt zwischen 250 mm/s und 750 mm/s, weiter bevorzugt zwischen 450 mm/s und 550 mm/s, beträgt, und/oder die Folientransportstrecke zwischen 10 mm und 5000 mm, bevorzugt zwischen 1500 mm und 3500 mm, weiter bevorzugt zwischen 2500 mm und 3000 mm, beträgt, und/oder dass in der zweiten Phase (203) die Folientransportdurchschnittsgeschwindigkeit zwischen 1 mm/s und 100 mm/s, bevorzugt zwischen 5 mm/s und 50 mm/s, beträgt, und/oder die Folientransportstrecke zwischen 3 mm und 50 mm, bevorzugt zwischen 3 mm und 10 mm, beträgt.

9. Verfahren nach Anspruch 1 und einem der Ansprüche 7 oder 8,
**dadurch gekennzeichnet,**
**dass** bei Erfassung der wenigstens einen Registermarke (7, 7') und/oder des wenigstens einen Motivs (6) von der ersten auf die zweite Phase (202, 203) gewechselt wird.

10. Verfahren nach einem der vorangehenden Ansprüche,
**dadurch gekennzeichnet,**
**dass** nach passgenauer Anordnung je eines Motivs (6) zu je einer Kavität (5) jeweils ein Freigabesignal erzeugt wird, insbesondere dass das Verfahren weiter zumindest einen der folgenden Schritte umfasst, welcher nach Erzeugung der Freigabesignale durchgeführt wird:
- Schließen des Spritzgusswerkzeugs (4)
- wenigstens bereichsweises Hinterspritzen der zu den Kavitäten (5) passgenau angeordneten Motive (6) der zumindest zwei nebeneinander angeordneten Folienbahnen (1, 1') mit einer Kunststoffmasse
- Öffnen des Spritzgusswerkzeugs (4)
- Abziehen einer Trägerschicht der zumindest zwei nebeneinander angeordneten Folienbahnen (1, 1') von den hinterspritzten Motiven (6)
- Entnahme eines Kunststoffformteils

11. Vorschubeinrichtung (20) mit einer Vorschubrichtung zum Vorschub von zumindest zwei in einer Richtung im Wesentlichen senkrecht zur Vorschubrichtung nebeneinander angeordneten Folienbahnen (1, 1') mit Motiven (6), umfassend zumindest zwei Folienabwickler (2, 2') und zumindest zwei Folienaufwickler (3, 3'), wobei je ein Folienabwickler (2, 2') und ein Folienaufwickler (3, 3') einer Folienbahn (1, 1') zugeordnet ist, **dadurch gekennzeichnet,**
**dass** die Vorschubeinrichtung wenigstens eine Justiereinrichtung umfasst, wobei die Justiereinrichtung einen Schrittmotor oder ein oder mehrere Servomotoren zur Justierung der beiden Folienbahnen (1, 1') senkrecht zur Vorschubrichtung aufweist,
und wobei die Vorschubeinrichtung (20) so ausgebildet ist, dass die zumindest zwei nebeneinander angeordneten Folienbahnen (1, 1') unabhängig voneinander bereitgestellt, zugeführt und/oder ausgerichtet werden.

12. Vorschubeinrichtung (20) nach Anspruch 11,
**dadurch gekennzeichnet,**
**dass** die Vorschubeinrichtung (20) wenigstens einen Sensor (8), insbesondere zur Erfassung von wenigstens einer Registermarke (7, 7') und/oder wenigstens eines Motivs (6) aufweist, insbesondere dass der wenigstens eine Sensor (8) ein Durchlicht- und/oder Auflichtsensor ist.

13. Vorschubeinrichtung (20) nach einem der Ansprüche11 oder 12, **gekennzeichnet durch** eine Steuereinrichtung (9), insbesondere zur Steuerung des voneinander unabhängigen Vorschubs der zumindest zwei nebeneinander angeordneten Folienbahnen (1, 1').

## Claims

1. Method for processing film webs (1, 1'), in particular IMD film webs (1, 1'), by means of a feed device (20) having a feed direction, wherein the feed device (20) has at least one alignment device, and wherein the alignment device has a stepping motor or one or more servomotors for aligning the two film webs (1, 1') perpendicularly to the feed direction, and an injection moulding tool (4) having at least two cavities (5), wherein the method has the following steps:
- providing at least two film webs (1, 1'), arranged one next to the other in the direction substantially perpendicular to the feed direction, with motifs (6),
- supplying the at least two film webs (1, 1') arranged one next to the other into the injection moulding tool (4),
- adjusting the at least two film webs (1, 1') arranged one next to the other in such a way that one motif (6) is arranged to fit precisely in relation to one cavity (5) in each case,
and wherein the adjustment or supply of the at least two film webs (1, 1') arranged one next to the other is respectively carried out by means of at least one register mark (7, 7'),
and wherein the at least two film webs (1, 1') arranged one next to the other are provided, supplied and/or adjusted independently of each other.

2. Method according to claim 1,
**characterised in that**
the adjustment and supply of the at least two film webs (1, 1') arranged one next to the other is respectively carried out by means of at least one register mark (7, 7').

3. Method for processing film webs (1, 1'), in particular IMD film webs (1, 1'), by means of a feed device (20) having a feed direction, wherein the feed device (20) has at least one alignment device, and wherein the alignment device has a stepping motor or one or more servomotors for aligning the two film webs (1, 1') perpendicularly to the feed direction, and an injection moulding tool (4) having at least two cavities (5), wherein the method comprises the following steps:
- providing at least two film webs (1, 1'), arranged one next to the other in the direction substantially perpendicular to the feed direction, with motifs (6),
- supplying the at least two film webs (1, 1') arranged one next to the other into the injection moulding tool (4),
- adjusting the at least two film webs (1, 1') arranged one next to the other in such a way that one motif (6) is arranged to fit precisely in relation to one cavity (5) in each case,
and wherein the adjustment or supply of the at least two film webs (1, 1') arranged one next to the other is respectively carried out by means of at least one motif (6) in each case of one of the at least two film webs (1, 1') arranged next to one another, and wherein the at least two film webs (1, 1') arranged one next to the other are provided, supplied and/or adjusted independently of one another.

4. Method according to claim 3,
**characterised in that**
the adjustment and supply of the at least two film webs (1, 1') arranged one next to the other is respectively carried out by means of at least one motif (6) in each case of one of the at least two film webs (1, 1') arranged one next to the other.

5. Method according to one of the preceding claims,
**characterised in that**
the alignment of the at least two film webs (1, 1') arranged one next to the other is carried out by means of a comparison of the position of the at least one register mark (7, 7') and/or of the position of the at least one motif (6) with the predetermined position of the cavities (5).

6. Method according to one of the preceding claims,
**characterised in that**
the injection moulding tool (4) has one or more further cavities (5) in the feed direction, such that several motifs (6) of one of the at least two film webs (1, 1') arranged one next to the other are arranged to fit precisely in relation to one cavity (5) in each case, in particular simultaneously.

7. Method according to one of the preceding claims,
**characterised in that**
supplying and/or adjusting the at least two films (1, 1') arranged one next to the other comprises a first and/or a second phase (202, 203), wherein the phases (202, 203) differ in particular as a result of the film transport average speed and/or film transport route, in particular,
in the first phase (202), the at least two film webs (1, 1') arranged one next to the other are adjusted with a higher film transport average speed and/or via a longer film transport route than in the second phase (203).

8. Method according to claim 7,
**characterised in that**,
in the first phase (202), the film transport average speed is between 1 mm/s and 1000 mm/s, preferably between 250 mm/s and 750 mm/s, further preferably between 450 mm/s and 550 mm/s, and/or the film transport route is between 10mm and 5000mm, preferably between 1500mm and 3500mm, further preferably between 2500mm and 3000mm, and/or, in the second phase (203), the film transport average speed is between 1 mm/s and 100 mm/s, preferably between 5 mm/s and 50 mm/s, and/or the film transport route is between 3mm and 50mm, preferably between 3mm and 10mm.

9. Method according to claim 1 and one of claims 7 or 8,
**characterised in that**,
switching from the first to the second phase (202, 203) occurs upon detecting the at least one register mark (7, 7') and/or the at least one motif (6).

10. Method according to one of the preceding claims,
**characterised in that**,
after the precise-fit arrangement of one motif (6) in relation to one cavity (5) in each case, a release signal is respectively generated, in particular the method further comprises at least one of the following steps, which is carried out after generating the release signals:
- closing the injection moulding tool (4)
- at least regionally back-injecting the motifs (6), arranged to fit precisely in relation to the cavities (5), of the at least two film webs (1, 1') arranged one next to the other with a plastic mass,
- opening the injection moulding tool (4),
- peeling off a carrier layer of the at least two film webs (1, 1') arranged one next to other from the back-injected motifs (6),
- removing a plastic moulded part

11. Feed device (20) having a feed direction for feeding at least two film webs (1, 1'), arranged one next to the other in a direction substantially perpendicular to the feed direction, having motifs (6), comprising at least two film decoilers (2, 2') and at least two film coilers (3, 3'), wherein in each case one film decoiler (2, 2') and one film coiler (3, 3') is allocated to a film web (1, 1'),
**characterised in that**
the feed device comprises at least one alignment device, wherein the alignment device has a stepping motor or one or more servomotors for aligning the two film webs (1, 1') perpendicularly to the feed direction,
and wherein the feed device (20) is formed in such a way that the at least two film webs (1, 1') arranged one next to the other are provided, supplied and/or adjusted independently of one another.

12. Feed device (20) according to claim 11,
**characterised in that**
the feed device (20) has at least one sensor (8), in particular for detecting at least one register mark (7, 7') and/or at least one motif (6), in particular the at least one sensor (8) is a transmitted light and/or incident light sensor.

13. Feed device (20) according to one of claims 11 or 12,
**characterised by** a control device (9), in particular for controlling the independent feed of the at least two film webs (1, 1') arranged one next to the other.

## Revendications

1. Procédé de traitement de bandes de film (1, 1'), en particulier de bandes de film IMD (1, 1'), au moyen d'un dispositif d'avancement (20) avec un sens d'avancement, dans lequel le dispositif d'avancement (20) présente au moins un dispositif d'ajustement, et dans lequel le dispositif d'ajustement présente un moteur pas à pas ou un ou plusieurs servomoteurs pour l'ajustement des deux bandes de film (1, 1') perpendiculairement au sens d'avancement, et un outil de moulage par injection (4) avec au moins deux cavités (5), dans lequel le procédé présente les étapes suivantes :
- la fourniture d'au moins deux bandes de film (1, 1') agencées en direction sensiblement perpendiculairement au sens d'avancement l'une à côté de l'autre avec des motifs (6),
- l'alimentation des au moins deux bandes de film (1, 1') agencées l'une à côté de l'autre dans l'outil de moulage par injection (4),
- l'orientation des au moins deux bandes de film (1, 1') agencées l'une à côté de l'autre de telle manière qu'à chaque fois un motif (6) soit agencé avec une grande précision vers une cavité (5),
et dans lequel l'orientation ou l'alimentation des au moins deux bandes de film (1, 1') agencées l'une à côté de l'autre est effectuée respectivement au moyen d'au moins une marque de registre (7, 7'),
et dans lequel les au moins deux bandes de film (1, 1') agencées l'une à côté de l'autre sont fournies, alimentées et/ou orientées indépendamment l'une de l'autre.

2. Procédé selon la revendication 1,
**caractérisé en ce**
**que** l'orientation et l'alimentation des au moins deux bandes de film (1, 1') agencées l'une à côté de l'autre sont effectuées respectivement au moyen d'au moins une marque de registre (7, 7').

3. Procédé de traitement de bandes de film (1, 1'), en particulier de bandes de film IMD (1, 1'), au moyen d'un dispositif d'avancement (20) avec un sens d'avancement, dans lequel le dispositif d'avancement (20) présente au moins un dispositif d'ajustement, et dans lequel le dispositif d'ajustement présente un moteur pas à pas ou un ou plusieurs servomoteurs pour l'ajustement des deux bandes de film (1, 1') perpendiculairement au sens d'avancement, et un outil de moulage par injection (4) avec au moins deux cavités (5), dans lequel le procédé présente les étapes suivantes :
- la fourniture d'au moins deux bandes de film (1, 1') agencées en direction sensiblement perpendiculairement au sens d'avancement l'une à côté de l'autre avec des motifs (6),
- l'alimentation des au moins deux bandes de film (1, 1') agencées l'une à côté de l'autre dans l'outil de moulage par injection (4),
- l'orientation des au moins deux bandes de film (1, 1') agencées l'une à côté de l'autre de telle manière qu'à chaque fois un motif (6) soit agencé avec une grande précision vers une cavité (5),
et dans lequel l'orientation ou l'alimentation des au moins deux bandes de film (1, 1') agencées l'une à côté de l'autre est effectuée respectivement au moyen d'au moins un motif (6) chaque fois d'une des au moins deux bandes de film (1, 1') agencées l'une à côté de l'autre,
et dans lequel les au moins deux bandes de film (1, 1') agencées l'une à côté de l'autre sont fournies, alimentées et/ou orientées indépendamment l'une de l'autre.

4. Procédé selon la revendication 3,
**caractérisé en ce**
**que** l'orientation et l'alimentation des au moins deux bandes de film (1, 1') agencées l'une à côté de l'autre sont effectuées respectivement au moyen d'au moins motif (6) chaque fois d'une des au moins deux bandes de film (1, 1') agencées l'une à côté de l'autre.

5. Procédé selon l'une des revendications précédentes,
**caractérisé en ce**
**que** l'orientation des au moins deux bandes de film (1, 1') agencées l'une à côté de l'autre est effectuée au moyen d'une comparaison de la position de l'au moins une marque de registre (7, 7') et/ou de la position de l'au moins un motif (6) avec la position prédéterminée des cavités (5).

6. Procédé selon l'une des revendications précédentes,
**caractérisé en ce**
**que** l'outil de moulage par injection (4) présente dans le sens d'avancement une ou plusieurs autres cavités (5) de sorte que plusieurs motifs (6) chaque fois d'une des au moins deux bandes de film (1, 1') agencées l'une à côté de l'autre soient agencés avec une grande précision, en particulier simultanément, vers une cavité (5).

7. Procédé selon l'une des revendications précédentes,
**caractérisé en ce**
**que** l'alimentation et/ou l'orientation des au moins deux films (1, 1') agencés l'un à côté de l'autre comporte une première et/ou une deuxième phase (202, 203), dans lequel les phases (202, 203) se distinguent en particulier par la vitesse moyenne de transport de film et/ou le trajet de transport de film, en particulier que dans la première phase (202) les au moins deux bandes de film (1, 1') agencées l'une à côté de l'autre sont orientées avec une vitesse moyenne de transport de film supérieure et/ou sur un trajet de transport de film plus long que dans la deuxième phase (203).

8. Procédé selon la revendication 7,
**caractérisé en ce**
**que** dans la première phase (202) la vitesse moyenne de transport de film est comprise entre 1 mm/s et 1 000 mm/s, de préférence entre 250 mm/s et 750 mm/s, de manière davantage préférée entre 450 mm/s et 550 mm/s, et/ou le trajet de transport de film est compris entre 10 mm et 5 000 mm, de préférence entre 1 500 mm et 3 500 mm, de manière davantage préférée entre 2 500 mm et 3 000 mm, et/ou que dans la deuxième phase (203) la vitesse moyenne de transport de film est comprise entre 1 mm/s et 100 mm/s, de préférence entre 5 mm/s et 50 mm/s, et/ou le trajet de transport de film est compris entre 3 mm et 50 mm, de préférence entre 3 mm et 10 mm.

9. Procédé selon la revendication 1 et l'une des revendications 7 ou 8,
**caractérisé en ce**
**que** lors de la détection d'au moins une marque de registre (7, 7') et/ou d'au moins un motif (6) on passe de la première à la deuxième phase (202, 203).

10. Procédé selon l'une des revendications précédentes,
caractérisé en
qu'après l'agencement avec une grande précision chaque fois d'un motif (6) vers une cavité (5) respectivement un signal de validation est généré, en particulier
que le procédé comporte en outre au moins une des étapes suivantes qui est réalisée après la génération des signaux de validation :
- la fermeture de l'outil de moulage par injection (4)
- l'injection par derrière au moins par endroits des motifs (6) agencés avec une grande précision vers les cavités (5) des au moins deux bandes de film (1, 1') agencées l'une à côté de l'autre avec une masse plastique
- l'ouverture de l'outil de moulage par injection (4)
- le retrait d'une couche de support des au moins deux bandes de film (1, 1') agencées l'une à côté de l'autre des motifs injectés par derrière (6)
- le prélèvement d'une partie formée en matière plastique.

11. Dispositif d'avancement (20) avec un sens d'avancement pour l'avancement des au moins deux bandes de film (1, 1') agencées dans une direction sensiblement perpendiculairement au sens d'avancement l'une à côté de l'autre avec des motifs (6), comprenant au moins deux dérouleurs de film (2, 2') et au moins deux enrouleurs de film (3, 3'), dans lequel chaque fois un dérouleur de film (2, 2') et un enrouleur de film (3, 3') sont associés à une bande de film (1, 1'),
**caractérisé en ce**
**que** le dispositif d'avancement comporte au moins un dispositif d'ajustement, dans lequel le dispositif d'ajustement présente un moteur pas à pas ou un ou plusieurs servomoteurs pour l'ajustement des deux bandes de film (1, 1') perpendiculairement au sens d'avancement,
et dans lequel le dispositif d'avancement (20) est réalisé de sorte que les au moins deux bandes de film (1, 1') agencées l'une à côté de l'autre soient fournies, alimentées et/ou orientées indépendamment l'une de l'autre.

12. Dispositif d'avancement (20) selon la revendication 11,
**caractérisé en ce**
**que** le dispositif d'avancement (20) présente au moins un capteur (8), en particulier pour la détection d'au moins une marque de registre (7, 7') et/ou d'au moins un motif (6), en particulier que l'au moins un capteur (8) est un capteur par transmission et/ou par réflexion.

13. Dispositif d'avancement (20) selon l'une des revendications 11 ou 12,
**caractérisé par** un dispositif de commande (9), en particulier pour la commande de l'avancement indépendant l'un de l'autre des au moins deux bandes de film (1, 1') agencées l'une à côté de l'autre.
